(19) **Europäisches Patentamt / European Patent Office / Office européen des brevets**

(11) **EP 2 475 126 B1**

(12) **EUROPEAN PATENT SPECIFICATION**

(45) Date of publication and mention
of the grant of the patent:
**12.11.2014 Bulletin 2014/46**

(21) Application number: **09849963.5**

(22) Date of filing: **30.09.2009**

(51) Int Cl.:
*H04L 1/14* (2006.01)      *H04B 7/06* (2006.01)
*H04B 7/08* (2006.01)      *H04L 25/02* (2006.01)
*H04L 25/03* (2006.01)      *H04L 1/00* (2006.01)

(86) International application number:
**PCT/CN2009/074353**

(87) International publication number:
**WO 2011/038555 (07.04.2011 Gazette 2011/14)**

(54) **METHOD, TERMINAL AND BASE STATION FOR PROCESSING CHANNEL STATE INFORMATION**

VERFAHREN, ENDGERÄT UND BASISSTATION ZUR VERARBEITUNG VON
KANALSTATUSINFORMATIONEN

PROCÉDÉ, TERMINAL ET STATION DE BASE POUR LE TRAITEMENT D'INFORMATION D'ÉTAT
DE CANAL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**11.07.2012 Bulletin 2012/28**

(73) Proprietor: **Huawei Technologies Co., Ltd.
Guangdong 518129 (CN)**

(72) Inventors:
• **ZHANG, Yongping
Shenzhen
Guangdong 518129 (CN)**
• **LI, Qiang
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**WO-A1-2009/085792     WO-A1-2009/107090**

**CN-A- 101 069 375     CN-A- 101 304 300
US-A1- 2009 154 588**

• **ALCATEL-LUCENT: "Comparison of CSI
Feedback Schemes", 3GPP DRAFT; R1-092149,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, no. San Francisco,
USA; 20090428, 28 April 2009 (2009-04-28),
XP050339592, [retrieved on 2009-04-28]**
• **ERICSSON: "Resource Block Size and CQI
Reporting", 3GPP DRAFT; R1-060107, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Helsinki,
Finland; 20060119, 19 January 2006 (2006-01-19),
XP050111249, [retrieved on 2006-01-19]**
• **ALCATEL-LUCENT SHANGHAI BELL ET AL:
"Concatenated codebook for DL CoMP in LTE-A",
3GPP DRAFT; R1-093352_CONCATENATED
CODEBOOK FOR COMP IN FDD-V3-CLEAN, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Shenzhen, China;
20090819, 19 August 2009 (2009-08-19),
XP050351657, [retrieved on 2009-08-19]**

**Description**

**FIELD OF THE INVENTION**

The present invention relates to the field of communications technologies, and in particular, to a method for processing channel state information a terminal and a base station.

**BACKGROUND OF THE INVENTION**

Compared with the third generation mobile communication systems, such as the WCDMA system, the TD-SCDMA system and the CDMA2000 system and the beyond third generation mobile communication systems, such as the LTE R8 system and the UMB system, the fourth generation mobile communication system achieves greater peak user throughput, greater average user throughput and greater edge user throughput, and better data transmission experience of a user. The coordinated multiple point transmission and reception (Coordinated Multiple Point Transmission and Reception; CoMP for short) technology is one of important key enabling technologies of the fourth generation mobile communication system, and may improve spectral efficiency dramatically. The coordinated multiple point transmission and reception technology refers to that multiple access points (Access Points; APs for short), which are geographically separated from each other, provide a data transmission service for one or more users at the same time. In the coordinated multiple point transmission and reception technology, before coordinated multiple point transmission or reception is performed, selection of an access point/set of a terminal and scheduling of time-frequency resources used by transmission are required to be performed first. A base station needs to use channel state information (channel state information, CSI for short) between the terminal and a candidate access point/set as an input or reference to perform the selection of the access point/set and the scheduling of the time-frequency resources used by the transmission.

In a conventional single point access transmission system, a downlink channel measurement method is as follows: A serving base station transmits a downlink reference signal. After receiving the reference signal, a terminal obtains channel state information by calculating. Then, the terminal feeds back the channel state information between the terminal and the serving point (a single point) thereof to the base station. However, in the case of multiple point transmission, multiple base stations each deliver a downlink reference signal, and the terminal is required to receive the reference signals from the multiple base stations and feed back channel state information between the terminal and the multiple coordination points. An amount of feedback of the terminal is the channel state information between the terminal and the multiple points. Meanwhile, a multi-point communication system employs the Multiple-Input Multiple-Out-put (multiple-input multiple-out-put; MIMO for short) technology, so that the number of antenna ports is very large, and the terminal is required to feed back, with respect to the different antenna ports, corresponding channel state information thereof respectively. Therefore, in the CoMP, the amount of information fed back is very large, but a load capable of being provided by uplink for the feedback is limited, so that a mechanism is required to reduce feedback overhead. For example, Philips puts forward, in R1-091288, a channel state information compression method based on multi-level coding (multi-level coding; MLC for short), in which a set of vector quantization codebooks are used to perform hierarchical vector quantization on channel parameters required to be fed back. A subject of quantization of a first level is the channel parameters required to be fed back, and then a subject of quantization of each level becomes an error value incurred by quantization of a preceding level. A compression result consists of two parts, and is $N$ bits totally, in which 1 bit is used to indicate a basic quantization result (that is, a result of the quantization of the first level) or a result of error quantization, and the rest $N-1$ are an actual quantization result. For example, Qualcomm puts forward, in R1-092698, a method of employing multiple description coding (Multiple Description Coding; MDC for short) to compress feedback information. Different from the conventional quantization compression method, the multiple description coding method employs $T$ quantization codebooks to perform quantization compression on a compression subject to obtain $T$ compression results, and mixes the $T$ compression results to obtain a compression result. The multiple description coding method quantizes the same subject through multiple quantization codebooks, where in fact a subject is observed from different perspectives. Compared with the conventional method using one quantization codebook for quantization, a result of multiple description compression may reflect original data more accurately, and cause a smaller quantization error.

During the implementation of the present invention, the inventors find that the prior art has at least the following problems.

In the prior art, the compression subject is channel state information of a specific sub-carrier at a specific moment, the amount of information of a compression result is large, and the compression ratio is low.

"3GPP Draft; Comparison of CSI Feedback Schemes; R1-092149, 20090428 3rd Generation Partnership Project (3GPP), Mobile Competence Centre; 650, route des Lucioles; F-06921 Sophia-Antipolis Cedex; France" discloses a frequency domain transformation, such as DCT, and quantization for reducing overhead of CSI feedback.

"3GPP Draft; Resource Block Size and CQI Reporting; R1-060107, 20060119 3rd Generation Partnership Project (3GPP), Mobile Competence Centre; 650, route des Luciole ; F-06921 Sophia-Antipolis Cedex; France" discloses DCT frequency domain transformation applied to a measured channel quality for CQI (Channel Quality Indicator) reporting.

US 2009/154588 A 1 discloses CQI quantization performed in the frequency domain.

"3GPP Draft; Concatenated codebook for DL CoMP in LTE-A; R1-093352 Concatenated codebook for CoMP in FDD-V3-clean, 20090819 3rd Generation Partnership Project (3GPP), Mobile Competence Centre ; 650, route des Lucioles ; F-06921 Sophia-Antipolis Cedex ; France" discloses DFT transform based codebook for CSI.

## SUMMARY OF THE INVENTION

Embodiments of the present invention provide a method for processing channel state information, a terminal and a base station, so as to decrease the number of bits of feedback information and improve compression efficiency without decreasing compression accuracy. The invention relates to embodiments comprising differential quantization and coding. References to other embodiments are to be understood as examples useful for understanding the invention.

An embodiment of the present invention provides a method for processing channel state information, which includes:

converting current channel state information into a current channel parameter frame, wherein the current channel parameter frame is a matrix of $1 \times N_{RB}$ that contains in each matrix element channel state information of one channel;
obtaining feedback information after performing frequency domain quantization and coding; and
sending the feedback information to a base station,

wherein the frequency domain quantization comprises frequency domain transformation and quantization, and wherein the frequency domain quantization and coding includes a direct quantization and coding method performed on the current channel parameter frame and a differential quantization and coding method performed on the current channel parameter frame and a previous channel parameter frame.

An embodiment of the present invention further provides a method for processing channel state information, which includes:

receiving current feedback information, which is sent by a terminal and corresponds to channel state information;
performing decoding and frequency domain inverse quantization on the current feedback information to obtain a current channel parameter reconstructed frame wherein the current channel parameter reconstructed frame is a matrix of $1 \times N_{RB}$ that contains in each matrix element channel state information of one channel; and
obtaining the channel state information of a corresponding time-frequency location by mapping according to the current channel parameter reconstructed frame;
wherein before the performing the decoding and frequency domain inverse quantization on the current feedback information, the method comprises:

obtaining a quantization and coding method including a direct quantization and coding method performed on the current channel parameter frame and a differential quantization and coding method performed on the current channel parameter frame and a previous channel parameter frame.

An embodiment of the present invention further provides a terminal, which includes:

a conversion module, configured to convert current channel state information into a current channel parameter frame wherein the current channel parameter frame is a matrix of $1 \times N_{RB}$ that contains in each matrix element channel state information of one channel;
a frequency domain quantization and coding module, configured to perform frequency domain quantization and coding on the current channel parameter frame to obtain feedback information, wherein the frequency domain quantization comprises frequency domain transformation and quantization;
a direct quantization submodule (121), configured to obtain a directly quantized coefficient after performing the frequency domain transformation and quantization on the current channel parameter frame;
a differential quantization submodule (125), configured to obtain a residual quantized coefficient after performing a differential operation, frequency transformation and quantization on the current channel parameter frame and a previous channel parameter frame according to the data saved in the buffer;; and
a sending module, configured to send the feedback information to a base station.

An embodiment of the present invention further provides a base station, which includes:

a receiving module, configured to receive current feedback information which is sent by a terminal and corresponds to channel state information;

a decoding and frequency domain inverse quantization module, configured to perform decoding and frequency domain inverse quantization on the current feedback information, so as to obtain a current channel parameter reconstructed frame, wherein the current channel parameter reconstructed frame is a matrix of $1 \times N_{RB}$ that contains in each matrix element channel state information of one channel, and wherein the frequency domain quantization comprises frequency domain transformation and quantization;

a first decoding and frequency domain inverse quantization submodule (231), configured to perform decoding, inverse quantization and frequency domain inverse transformation on the current feedback information to obtain the current channel parameter reconstructed frame if the quantization and coding method is a direct quantization and coding method, and update data saved in a buffer with the current channel parameter reconstructed frame;

a second decoding and frequency domain inverse quantization submodule (232), configured to perform decoding, inverse quantization and frequency domain inverse transformation on the current feedback information and a previous feedback information to obtain a reconstructed residual if the quantization and coding method is a differential quantization and coding method, obtain the current channel parameter reconstructed frame and the previous channel parameter reconstructed frame after adding the reconstructed residual and the data saved in the buffer, and update the data saved in the buffer with the current channel parameter reconstructed frame and the previous channel parameter reconstructed frame;; and

a mapping module, configured to obtain the channel state information of a corresponding time-frequency location by mapping according to the current channel parameter reconstructed frame.

In the method for processing channel state information, the terminal and the base station provided by the embodiments of the present invention, after converting the current channel state information into the current channel parameter frame, the terminal performs the frequency domain quantization on the current channel parameter frame, and codes the obtained quantized coefficient to obtain the feedback information, thereby decreasing the number of bits of the feedback information and improving compression efficiency without decreasing compression accuracy.

## BRIEF DESCRIPTION OF THE DRAWINGS

To describe the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons skilled in the art can derive other drawings from the accompanying drawings without creative efforts.

FIG. 1 is a schematic structural diagram of a CoMP downlink system in an embodiment of the present invention;

FIG 2 is a flow chart of a first embodiment of a channel state information processing method according to the present invention;

FIG 3 is a flow chart of a second embodiment of the channel state information processing method according to the present invention;

FIG. 4 is a flow chart of a frequency domain quantization and coding process, including a determining step of a quantization and coding method, in the second embodiment of the channel state information processing method according to the present invention;

FIGs. 5A and 5B show a flow chart of a frequency domain quantization and coding process, including a step of zero-padding processing, in the second embodiment of the channel state information processing method according to the present invention;

FIG 6 is a flow chart of a third embodiment of the channel state information processing method according to the present invention;

FIG 7a is a flow chart of a fourth embodiment of the channel state information processing method according to the present invention;

FIG 7b is a schematic diagram of a channel parameter frame in the fourth embodiment of the channel state information processing method according to the present invention;

FIG 7c is a schematic diagram of a channel state information compression process in a sixth embodiment of the channel state information processing method according to the present invention;

FIG 7d is a schematic diagram of a channel state information decompression process in the sixth embodiment of the channel state information processing method according to the present invention;

FIG 8 is a flow chart of a fifth embodiment of the channel state information processing method according to the present invention;

FIG 9 is a flow chart of the sixth embodiment of the channel state information processing method according to the present invention;

FIG 10 is a schematic diagram of a channel parameter frame taking into account of a spatial correlation in a seventh embodiment of the channel state information processing method according to the present invention;

FIG 11 is a schematic structural diagram of an embodiment of a terminal according to the present invention; and

FIG 12 is a schematic structural diagram of an embodiment of a base station according to the present invention.

## DETAILED DESCRIPTION OF THE EMBODIMENTS

The technical solutions of the present invention are further described below in detail through the accompanying drawings and embodiments.

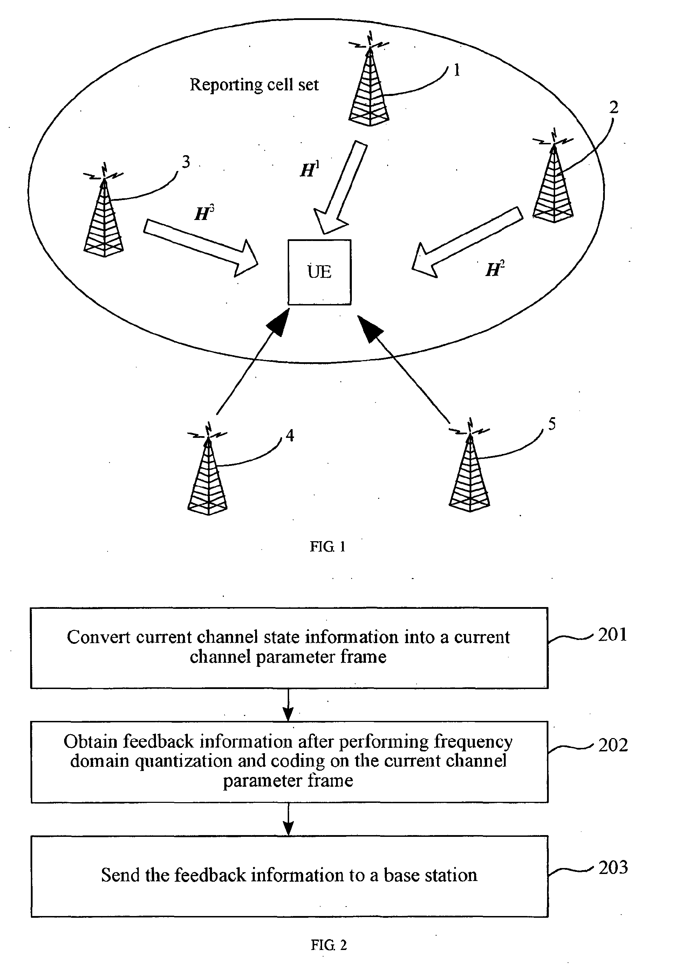

FIG 1 is a schematic structural diagram of a CoMP downlink system in an embodiment of the present invention. As shown in FIG 1, the CoMP downlink system includes five cells (Cell) and a user equipment (UE). It is assumed that a cell 1, a cell 2 and a cell 3 are in a reporting cell set (Reporting Set), a cell 4 and a cell 5 are not in the reporting cell set, the UE may feed back downlink channel state information between all of the cells in the reporting cell set and the UE, and the downlink channel state information may be represented by a downlink channel matrix, for example, $H^1$, $H^2$ and $H^3$ in FIG 1. In a direct channel feedback method, $H^1$, $H^2$ and $H^3$ are directly fed back to an eNB in the cell after they undergo compression processing. In the embodiment of the present invention, the UE not only may compress the complete channel matrix $H$ (including $H^1$, $H^2$ and $H^3$) of the reporting cell set, but also may compress a partial matrix obtained after singular value decomposition (Singular Value Decomposition; SVD for short) is performed on the matrix $H$. For example, it is assumed that $H=U\sum V^H$. where $U$ and $V$ are unitary matrixes, $\sum$ is a diagonal matrix, a diagonal $\sum$ consists of eigenvalues of $H$ that are arranged in descending order, and a combination of any one or two of the three matrixes $U$, $V$ and $\sum$ after the decomposition is a partial matrix obtained after the $H$ is decomposed. In the embodiment of the present invention, the complete channel matrix $H$ and the partial matrix obtained after $H$ is decomposed are called channel state information.

FIG 2 is a flow chart of a first embodiment of a channel state information processing method according to the present invention. As shown in FIG 2, the channel state information processing method includes the following steps:

Step 201: Convert current channel state information into a current channel parameter frame.

A terminal may measure channel state information required to be fed back to a base station. The channel state information may be compressed in time, frequency and space dimensions. The terminal may convert the current channel state information into one or more current channel parameter frames.

Step 202: Obtain feedback information after performing frequency domain quantization and coding on the current channel parameter frame.

A quantization and coding method used by the terminal to perform the frequency domain quantization and coding on the channel parameter frame may include: a direct quantization and coding method and/or a differential quantization and coding method. The direct quantization and coding method refers to that, the terminal directly performs frequency domain transformation on the current channel parameter frame, quantizes a frequency domain coefficient obtained through the frequency domain transformation, and codes the quantized coefficient obtained after the frequency domain quantization. The differential quantization and coding method refers to that: after performing a differential operation on the current channel parameter frame and a previous channel parameter frame, the terminal performs frequency domain transformation on a residual obtained through the differential operation, quantizes a frequency domain coefficient obtained through the frequency domain transformation, and codes the quantized coefficient obtained after the frequency domain quantization. A frequency domain transformation method may be the discrete Fourier transform (Discrete Fourier Transform; DFT for short), the discrete cosine transform (Discrete Cosine Transform; DCT for short) or the discrete wavelet transform (Discrete Wavelet Transform; DWT for short), and so on. In the embodiment of the present invention, the direct quantization and coding or the differential quantization and coding may be performed on all channel parameter frames of each moment; alternatively, the direct quantization and coding may be performed on channel parameter frames of some moments, and the differential quantization and coding may be performed on channel parameter frames of other moments. For example, the direct quantization and coding is performed on a first channel parameter frame and the differential quantization and coding is performed on a second and other channel parameter frames.

In the method used by the terminal to code the quantized coefficient obtained after the frequency domain quantization, for example, the quantized coefficient of each channel parameter frame may be coded to obtain feedback information of M bits, and 1 bit for indicating the quantization and coding method of each channel parameter frame may be added for the information of every M bits, in this case, the feedback information is of M+1 bits.

Step 203: Send the feedback information to a base station.

In the embodiment, after converting the current channel state information into the current channel parameter frame, the terminal performs the frequency domain quantization on the current channel parameter frame, and codes the obtained quantized coefficient to obtain the feedback information, thereby decreasing the number of bits of the feedback information and improving compression efficiency without decreasing compression accuracy.

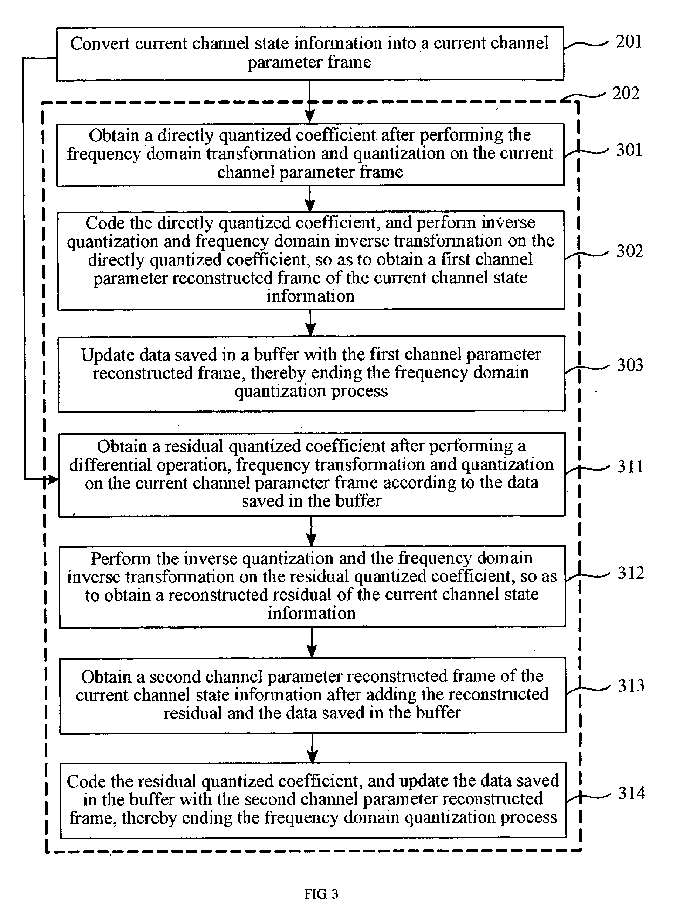

FIG 3 is a flow chart of a second embodiment of a channel state information processing method according to the present invention. The embodiment includes a specific process in which a terminal performs frequency domain quantization and coding on a channel parameter frame. As shown in FIG 3, based on the first embodiment of the channel state information processing method according to the present invention, in step 201 of the method for processing channel state information, current channel state information may all be converted into a current channel parameter frame; or the current channel state information may be divided into more than one current channel parameter frame according to a set rule.

Further, step 202 of the channel state information processing method may include the following situations:

Situation 1: A quantization and coding method used by the terminal to perform the frequency domain quantization and coding on the current channel parameter frame may be a direct quantization and coding method, in the case, the frequency domain quantization and coding process is as follows:

Step 301: Obtain a directly quantized coefficient after performing the frequency domain transformation and quantization on the current channel parameter frame.

Step 302: Code the directly quantized coefficient, and perform inverse quantization and frequency domain inverse transformation on the directly quantized coefficient, so as to obtain a first channel parameter reconstructed frame of the current channel state information.

Step 303: Update data saved in a buffer with the first channel parameter reconstructed frame. The frequency domain quantization process ends.

The frequency domain quantization includes frequency domain transformation and quantization. Specifically, a quantization process is: a codeword which has the shortest Euclidean distance to the frequency domain coefficient obtained through the frequency domain transformation is searched for in a quantization codebook, and is used as a quantization result.

Situation 2: A quantization and coding method used by the terminal to perform the frequency domain quantization on the current channel parameter frame may be a differential quantization and coding method, in the case the frequency domain quantization process is as follows:

Step 311: Obtain a residual quantized coefficient after performing a differential operation, frequency transformation and quantization on the current channel parameter frame according to the data saved in the buffer.

Step 312: Perform inverse quantization and the frequency domain inverse transformation on the residual quantized coefficient, so as to obtain a reconstructed residual of the current channel state information.

Step 313: Obtain a second channel parameter reconstructed frame of the current channel state infonnation after adding the reconstructed residual and the data saved in the buffer.

Step 314: Code the residual quantized coefficient, and update the data saved in the buffer with the second channel parameter reconstructed frame. The frequency domain quantization process ends.

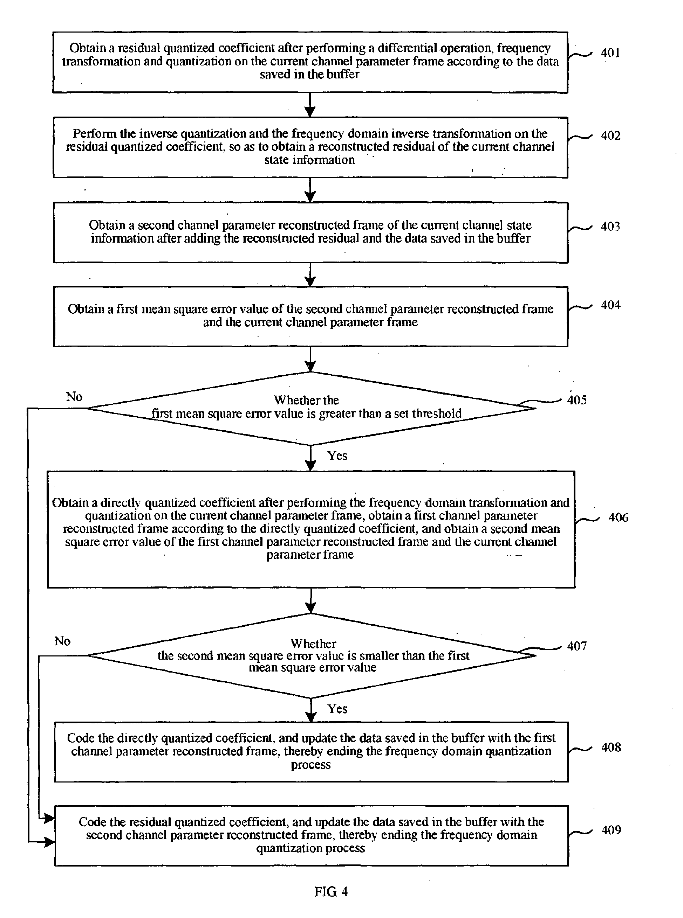

Further, in Situation 2, the process of performing the frequency domain quantization on the current channel parameter frame may include a determining step of a quantization and coding method. FIG. 4 is a flow chart of the frequency domain quantization and coding process, including the determining step of a quantization and coding method, in the second embodiment of the channel state information processing method according to the present invention. As shown in FIG 4, the process, in which the terminal performs the frequency domain quantization and coding specifically includes:

Step 401: Obtain a residual quantized coefficient after performing the differential operation, frequency transformation and quantization on the current channel parameter frame according to the data saved in the buffer.

Step 402: Perform inverse quantization and the frequency domain inverse transformation on the residual quantized coefficient, so as to obtain a reconstructed residual of the current channel state information

. Step 403: Obtain a second channel parameter reconstructed frame of the current channel state information after adding the reconstructed residual and the data saved in the buffer.

Step 404: Obtain a first mean square error value of the second channel parameter reconstructed frame and the current channel parameter frame.

Step 405: Judge whether the first mean square error value is greater than a set threshold, execute step 406 if the first mean square error value is greater than the set threshold, and execute step 409 if the first mean square error value is not greater than the set threshold.

Step 406: Obtain a directly quantized coefficient after performing the frequency domain transformation and quantization on the current channel parameter frame, obtain a first channel parameter reconstructed frame according to the directly quantized coefficient, and obtain a second mean square error value of the first channel parameter reconstructed frame and the current channel parameter frame.

Step 407: Judge whether the second mean square error value is smaller than the first mean square error value, execute step 408 if the second mean square error value is smaller than the first mean square error value, and execute step 409 if the second mean square error value is not smaller than the first mean square error value.

Step 408: Code the directly quantized coefficient, and update the data saved in the buffer with the first channel parameter reconstructed frame. The frequency domain quantization process ends.

Step 409: Code the residual quantized coefficient, and update the data saved in the buffer with the second channel parameter reconstructed frame. The frequency domain quantization process ends.

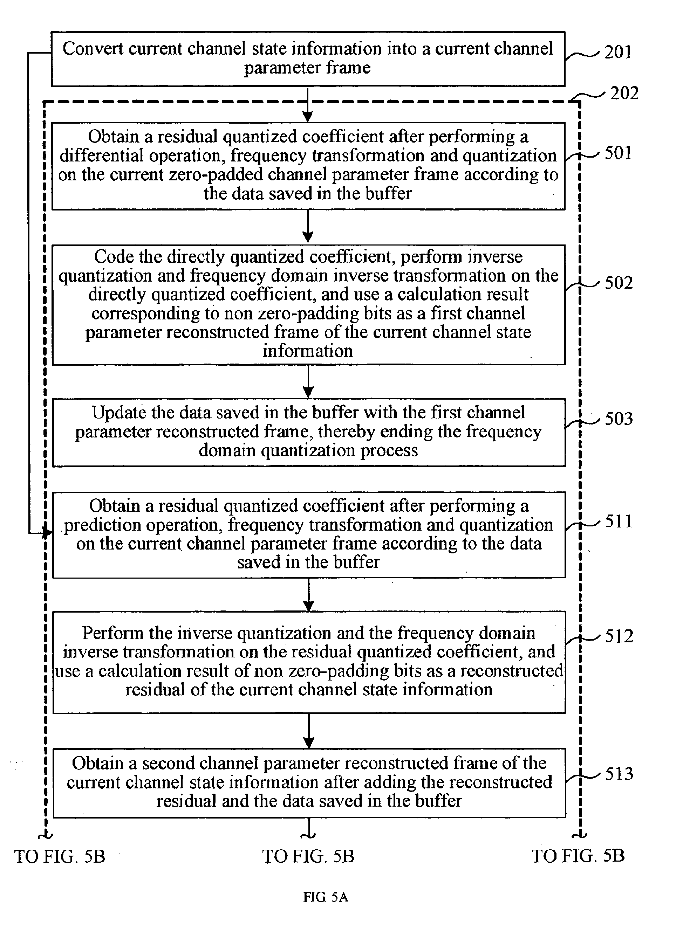

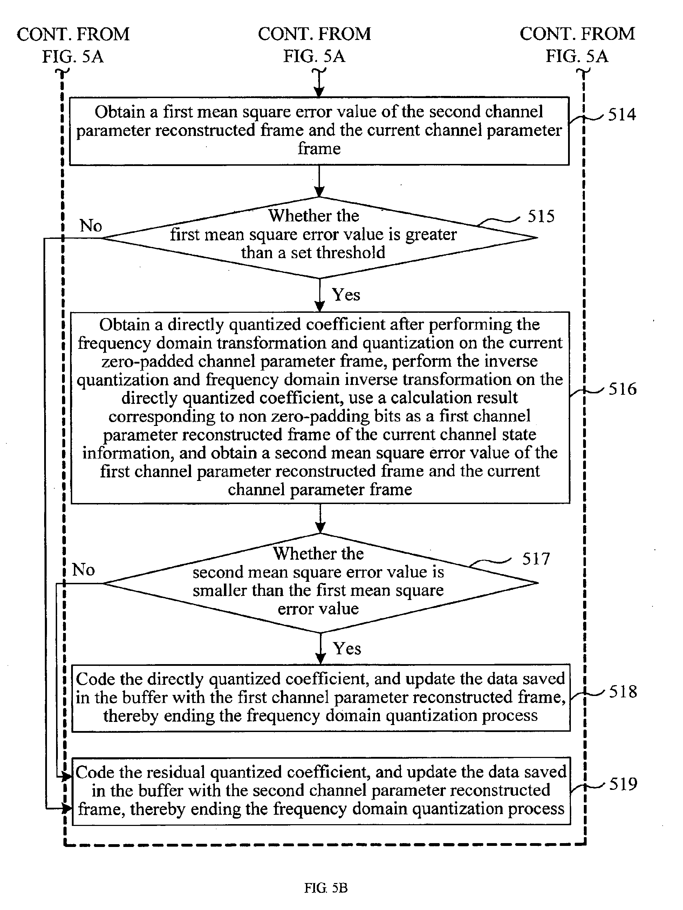

Further, in order to facilitate implementation of fast Fourier transform, reduce the value range of the frequency domain coefficient, and prevent the case that an overload situation occurs in the quantization process, the process of performing the frequency domain quantization on the current channel parameter frame may further include a step of zero-padding processing, which is, for example, after step 201 and before step 202, zero-padding processing is performed on the current channel parameter frame. FIG 5 is a flow chart of the frequency domain quantization and coding process, including the step of zero-padding processing, in the second embodiment of the channel state information processing method according to the present invention. As shown in FIG. 5, in step 202, the frequency domain quantization and coding process specifically includes the following situations.

Situation 3: A quantization and coding method used by the terminal to perform the frequency domain quantization on a current zero-padded channel parameter frame may be a direct quantization and coding method, and therefore the process in which the terminal performs the frequency domain quantization and coding is as follows:

Step 501: Perform frequency domain transformation and quantization on the current zero-padded channel parameter frame, so as to obtain a directly quantized coefficient.

Step 502: Code the directly quantized coefficient, perform inverse quantization and frequency domain inverse transformation on the directly quantized coefficient, and use a calculation result corresponding to non zero-padding bits as a first channel parameter reconstructed frame of the current channel state information.

Step 503: Update the data saved in the buffer with the first channel parameter reconstructed frame. The frequency domain quantization process ends.

Situation 4: The quantization and coding method used by the terminal to perform the frequency domain quantization on the current zero-padded channel parameter frame may be a differential quantization and coding method. Assuming that quantization and coding method decision is further performed in the differential quantization and coding process, a specific method for the terminal to perform the frequency domain quantization and coding process is as follows:

Step 511: Obtain a residual quantized coefficient after performing a differential operation, frequency transformation and quantization on the current zero-padded channel parameter frame according to the data saved in the buffer.

Step 512: Perform inverse quantization and the frequency domain inverse transformation on the residual quantized coefficient, and use a calculation result of non zero-padding bits used as a reconstructed residual of the current channel state information.

Step 513: Obtain a second channel parameter reconstructed frame of the current channel state information after adding the reconstructed residual and the data saved in the buffer.

Step 514: Obtain a first mean square error value of the second channel parameter reconstructed frame and the current channel parameter frame.

Step 515: Judge whether the first mean square error value is greater than a set threshold, execute step 516 if the first mean square error value is greater than the set threshold, and execute step 519 if the first mean square error value is not greater than the set threshold.

Step 516: Obtain a directly quantized coefficient after performing the frequency domain transformation and quantization on the current zero-padded channel parameter frame, perform the inverse quantization and frequency domain inverse transformation on the directly quantized coefficient, use a calculation result corresponding to non zero-padding bits as a first channel parameter reconstructed frame of the current channel state information, and obtain a second mean square error value of the first channel parameter reconstructed frame and the current channel parameter frame.

Step 517: Judge whether the second mean square error value is smaller than the first mean square error value, execute step 518 if the second mean square error value is smaller than the first mean square error value, and execute step 519 if the second mean square error value is not smaller than the first mean square error value.

Step 518: Code the directly quantized coefficient, and update the data saved in the buffer with the first channel parameter reconstructed frame. The frequency domain quantization process ends.

Step 519: Code the residual quantized coefficient, and update the data saved in the buffer with the second channel parameter reconstructed frame. The frequency domain quantization process ends.

In step 203 of the first embodiment of the channel state information processing method according to the present invention, the terminal may code the quantized coefficient obtained through the frequency domain quantization, so as to obtain feedback information of the channel state information. The feedback information may include a bit for indicating the quantization and coding method. Then, the terminal may send the feedback information to a base station.

In the embodiment, after the terminal converts the current channel state information into the current channel parameter frame, the zero-padding processing may be performed on the channel parameter frame, so as to facilitate implementation of the fast Fourier transform, reduce the value range of the frequency domain coefficient, and prevent the case that an overload situation occurs in the quantization process. Then, the direct quantization and coding method or the differential quantization and coding method is implemented on the current zero-padded channel parameter frame, and the obtained quantized coefficient is coded to obtain the feedback information, so as to eliminate relevant information of the channel state information in the time domain and the frequency domain, thereby decreasing the number of bits of the feedback information and improving compression efficiency without decreasing compression accuracy.

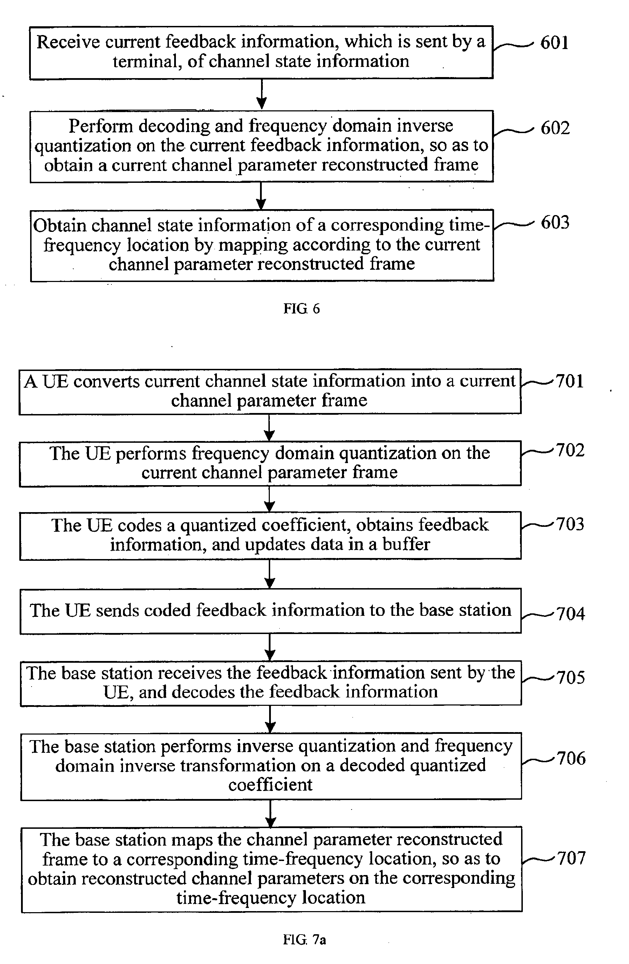

FIG 6 is a flow chart of a third embodiment of a channel state information processing method according to the present invention. The embodiment includes a specific process in which a base station performs decoding and frequency domain inverse quantization on received feedback information. As shown in FIG 6, the channel state information processing method includes:

Step 601: Receive current feedback information, which is sent by a terminal, of channel state information.

Step 602: Perform decoding and frequency domain inverse quantization on the current feedback information, so as to obtain a current channel parameter reconstructed frame.

Before the frequency domain inverse quantization is performed on a quantized coefficient, the terminal is required to obtain a quantization and coding method. The quantization and coding method includes a direct quantization and coding method and a differential quantization and coding method. A specific method may be as follows. A preset quantization and coding method is obtained, or a quantization and coding method is obtained from the current feedback information, so as to perform the decoding and frequency domain inverse quantization on the current feedback information according to the quantization and coding method.

In the process in which the terminal performs the frequency domain quantization to obtain the quantized coefficient, the employed quantization and coding method may be preset, and in this case the base station may directly obtain the preset quantization and coding method. If the quantization and coding method employed by the terminal is not preset, but is determined during the process in which the frequency domain quantization is performed on each channel parameter frame, the feedback information should carry the quantization and coding method. The base station may obtain the quantization and coding method from the received feedback information.

If the terminal does not employ the zero-padding processing during the process in which the frequency domain quantization is performed on the channel parameter frame, the process, in which the base station performs the frequency domain inverse quantization on the quantized coefficient to obtain the current channel parameter reconstructed frame, may include:

If the quantization and coding method is the direct quantization and coding method, performing decoding, inverse quantization and frequency domain inverse transformation on the current feedback information to obtain a current channel parameter reconstructed frame, and updating data saved in a buffer with the current channel parameter reconstructed frame; or

If the quantization and coding method is the differential quantization and coding method, performing decoding, inverse quantization and frequency domain inverse transformation on the current feedback information to obtain a reconstructed residual, obtaining a current channel parameter reconstructed frame after adding the reconstructed residual and the data saved in the buffer, and updating the data saved in the buffer with the current channel parameter reconstructed frame.

If the terminal employs zero-padding processing during the process in which the frequency domain quantization is performed on the channel parameter frame, the quantized coefficient is zero-padded data, and the process in which the base station performs the frequency domain inverse quantization on the quantized coefficient to obtain the current channel parameter reconstructed frame may include:

If the quantization and coding method is the direct quantization and coding method, performing decoding, inverse quantization and frequency domain inverse transformation on the current feedback information, using a calculation result of non zero-padding bits as a current channel parameter reconstructed frame, and updating the data saved in the buffer with the current channel parameter reconstructed frame; or

If the quantization and coding method is the differential quantization and coding method, performing decoding, inverse quantization and frequency domain inverse transformation on the current feedback information, using a calculation result of non zero-padding bits as a reconstructed residual, obtaining a current channel parameter reconstructed frame after adding the reconstructed residual and the data saved in the buffer, and updating the data saved in the buffer with the current channel parameter reconstructed frame.

Step 603: Obtain channel state information of a corresponding time-frequency location by mapping according to the current channel parameter reconstructed frame.

In the embodiment, the terminal eliminates relevant information of the channel station information in the time domain, the frequency domain and the spatial domain when compressing the channel state information, thereby decreasing the number of bits of the feedback information and improving compression efficiency without decreasing compression accuracy. After receiving the current feedback information which is sent by the terminal and corresponds to the channel state information, the base station may decode the current feedback information, and perform the frequency domain inverse quantization on the obtained quantized coefficient, so as to obtain the current channel parameter reconstructed frame, thereby obtaining the channel state information of the corresponding time-frequency location accurately, and achieving high decompression efficiency.

FIG 7a is a flow chart of a fourth embodiment of a channel state information processing method according to the present invention. The embodiment includes a specific process, in which a terminal performs frequency domain quantization and coding on a channel parameter frame to obtain feedback information and a base station performs decoding and frequency domain inverse quantization on the received feedback information. As shown in FIG 7a, the channel state information processing method includes the following steps:

The process in which a UE performs compression processing on channel state information is illustrated first.
Step 701: A UE converts current channel state information into a current channel parameter frame $H_{i,j}(n)$.

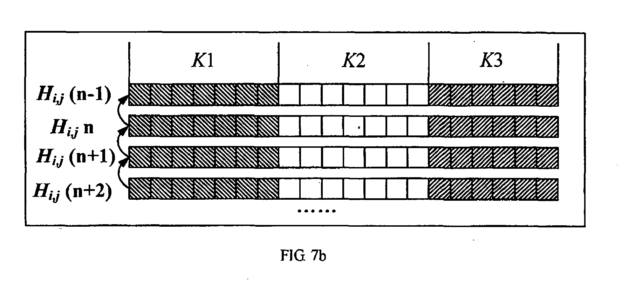

It is assumed that the number of transmitting antenna ports of a base station (an eNB) is $N_T$, the number of receiving antenna ports of the UE is $N_R$, and the channel state information is a channel parameter matrix, so that each channel parameter matrix has $N_R \times N_T$ elements. In the embodiment, it is assumed that the spatial correlation is not taken into account, and the $N_R \times N_T$ elements in the channel parameter matrix are only compressed in the dime and frequency dimensions. The compression process is carried out on the UE, a cell is used as an example, and it is assumed that $H_{i,j}$ represents an element of row $i$ and column $j$ of a channel parameter matrix $H$ which is measured by the UE and is to be fed back. Meanwhile, it is assumed that a bandwidth of the cell is $N_{RB}$, the UE may obtain $N_{RB}$ channel parameter matrixes $H$ by measuring at one moment, a cycle of feedback time is $N$, and the channel parameter matrixes of the whole bandwidth may be divided into $K$ parts for feedback. FIG 7b is a schematic diagram of a channel parameter frame in the fourth embodiment of the channel state information processing method according to the present invention. As shown in FIG 7b, in the time domain, for a low-speed channel, channel parameters, with the number being an integer multiple of $N$, may be used as a feedback subject directly; in the frequency domain, the channel parameter matrixes H may be divided into $K$ parts, where the division may be performed by using multiple methods, for example, by using an equal-division method. For example, $N_{RB} = 20$ and $K = 3$, the first 2 parts may include 7 channel parameters, and the third part has 6 channel parameters. The division method remains the same at all moments, thereby obtaining the channel parameter frame shown in FIG 7b, where n is the current moment.

If all of the channel parameters on the whole frequency band are fed back as a whole, at the current n, each channel parameter frame processed by the terminal is a matrix $H_{i,j}(n)$ of $1 \times N_{RB}$, and the following formula (1) may be obtained:

$$H_{i,j}(n) = \left[ H_{i,j}(n,1)\, H_{i,j}(n,2)\, H_{i,j}(n,3) \ldots H_{i,j}(n,N_{RB}) \right] \quad (1).$$

If *K* = 3, all of the channel parameters of the whole frequency band are divided into 3 parts, and at the current n, the number of the channel parameter frames processed by the terminal is 3, as shown in the following formulas (2) to (4):

$$H_{i,j}(n) = \left[ H_{i,j}(n,1) \ H_{i,j}(n,2) \ H_{i,j}(n,3) \dots H_{i,j}(n,7) \right] \quad (2)$$

$$H_{i,j}(n) = \left[ H_{i,j}(n,8) \ H_{i,j}(n,9) \ H_{i,j}(n,10) \dots H_{i,j}(n,14) \right] \quad (3)$$

$$H_{i,j}(n) = \left[ H_{i,j}(n,15) \ H_{i,j}(n,16) \ H_{i,j}(n,17) \dots H_{i,j}(n,N_{RB}) \right] \quad (4).$$

Step 702: The UE performs frequency domain quantization on the current channel parameter frame $H_{i,j}(n)$.
Step 703: The UE codes a quantized coefficient, obtains feedback information, and updates data in a buffer.

The frequency domain quantization and coding includes two methods: a direct quantization and coding method and a differential quantization and coding method.

A process of the direct quantization and coding is as follows: The UE performs frequency domain transformation on the current channel parameter frame $H_{i,j}(n)$ directly. The number of points of the frequency domain transformation is $N_{RB}$. The frequency domain transformation may be the DFT, DCT or DWT, and so on. Then, quantization is performed on a frequency domain coefficient obtained through the frequency domain transformation, and a quantized coefficient obtained after the frequency domain quantization is coded. Specifically, a quantization process is: a codeword which has the shortest Euclidean distance to the frequency domain coefficient obtained through the frequency domain transformation is searched for in a quantization codebook, and is used as a quantization result.

A process of the differential quantization and coding is as follows: The UE performsa differential operation on the current channel parameter frame $H_{i,j}(n)$ and a previous channel parameter reconstructed frame $H_{i,j}(n\text{-}1)$. It should be noted that, when the compression subject $H_{i,j}(n)$ is a unit value (that is, a modulus of a coefficient of a channel parameter frame is 1), the differential operation employs a coefficient division method, that is, phase subtraction. Frequency domain transformation is performed on the residual obtained through the differential. The number of points of the frequency domain transformation is $N_{RB}$. Quantization is performed on a coefficient obtained through the frequency domain transformation. The quantized coefficient obtained after the frequency domain quantization is coded.

In the embodiment, the direct quantization and coding or the differential quantization and coding may be performed on all channel parameter frames of each moment in a cycle; alternatively, the direct quantization and coding may be performed on a part of channel parameter frames of each moment in the cycle, and the differential quantization and coding may be performed on a part of channel parameter frames of each moments in the cycle. For example, in a cycle, the direct quantization and coding is performed on a first first channel parameter frame and the differential quantization and coding is performed on the other channel parameter frames.

Specifically, if the direct quantization and coding method is employed for the first channel parameter frame, the UE obtains a directly quantized coefficient after performing the frequency domain transformation and quantization on the first channel parameter frame in a cycle, so that the directly quantized coefficient of the first channel parameter frame of the UE is coded; meanwhile, inverse quantization and frequency domain inverse transformation are performed on the directly quantized coefficient, the number of points of the frequency domain inverse transformation is $N_{RB}$, a current first channel parameter reconstructed frame $H'_{i,j}(n)$ is obtained after the frequency domain inverse transformation, and the first channel parameter reconstructed frame $H'_{i,j}(n)$ is saved in the buffer for the frequency domain quantization and coding of a next channel parameter frame.

If the differential quantization and coding method is employed for the second channel parameter frame, the UE may obtain a residual quantized coefficient of the second parameter frame after performing the differential operation, frequency domain transformation and quantization on the second channel parameter frame and $H'_{i,j}(n)$ in the buffer. The UE performs the inverse quantization and frequency domain inverse transformation on the residual quantized coefficient of the second parameter frame, where the number of points of the frequency domain transformation is $N_{RB}$,

adds the first channel reconstructed parameter frame $H'_{i,j}(n)$ in the current buffer to obtain a current second channel parameter reconstructed frame $H'_{i,j}(n+1)$, and updates the buffer with $H'_{i,j}(n+1)$, which is used for the frequency domain quantization and coding of a next channel parameter frame.

Step 704: The UE sends coded feedback information to the base station.

The UE codes the quantized coefficient of step 703. For example, the quantized coefficient may be coded to obtain feedback information of $M$ bits, which is sent to the base station of the cell.

Then, the process in which the base station performs decompression processing on the channel state information is illustrated.

Step 705: The base station receives the feedback information sent by the UE, and decodes the feedback information.

After receiving the feedback information transmitted by the UE, the base station may read the information of $M$ bits in sequence each time, and decode the read bits of information to obtain a quantized coefficient. Before decoding, the base station may obtain a preset quantization and coding method, or obtain a quantization and coding method from the feedback information. After the base station obtains the quantization and coding method, it is assumed that a first information parameter frame in a cycle employs the direct quantization and coding method, and other information parameter frames in the cycle employs the differential quantization and coding method.

Step 706: The base station performs inverse quantization and frequency domain inverse transformation on a decoded quantized coefficient.

First, the base station decodes a first piece of information of $M$ bits to obtain a quantized coefficient, performs the inverse quantization and frequency domain inverse transformation directly, where the number of points of the frequency domain inverse transformation is $N_{RB}$, obtains a corresponding channel parameter reconstructed frame $H'_{i,j}(n)$ through the frequency domain inverse transformation, and updates the buffer with the channel parameter reconstructed frame $H'_{i,j}(n)$.

The base station performs the inverse quantization and frequency domain inverse transformation on a quantized coefficient obtained by decoding a second information parameter frame information parameter frame, where the number of points of the frequency domain inverse transformation is $N_{RB}$, obtains a differential reconstructed matrix, adds the differential reconstructed matrix and $H'_{i,j}(n)$ in the buffer to obtain a corresponding channel parameter reconstructed frame $H'_{i,j}(n+1)$, and updates the buffer with $H'_{i,j}(n+1)$.

Step 707: The base station maps the channel parameter reconstructed frame to a corresponding time-frequency location, so as to obtain reconstructed channel parameters on the corresponding time-frequency location. The reconstructed channel parameters, which are obtained by mapping and are on the corresponding time-frequency location, may be the same as the channel parameters of each moment in step 701 and in FIG. 7b.

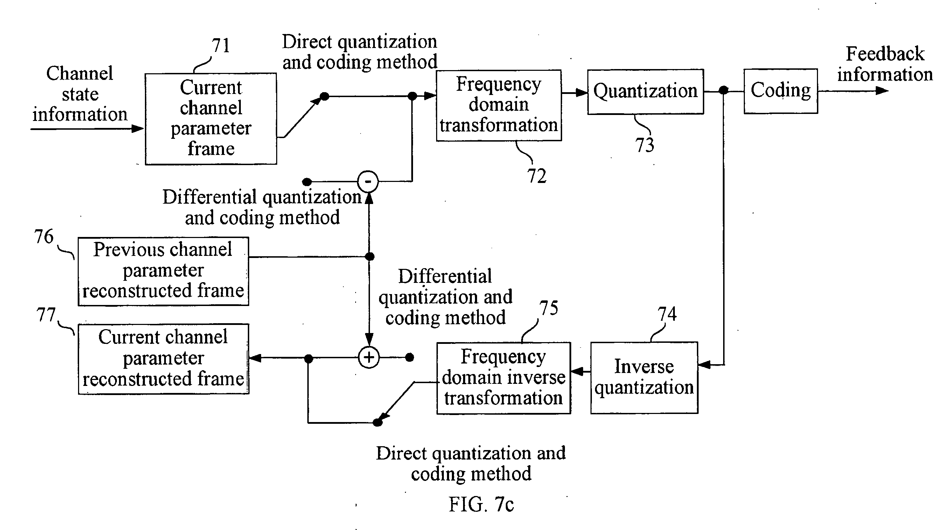

By summarizing the compression steps in the embodiment of the present invention, the channel state information compression process may be obtained. FIG 7c is a schematic diagram of a channel state information compression process in a sixth embodiment of the channel state information processing method according to the present invention. As shown in FIG 7c, first, a UE obtains a current channel parameter frame 71 according to current channel state information. The direct quantization and coding method or the differential quantization and coding method may be selected to be executed (in the embodiment, the direct quantization and coding method is selected to be executed for the first channel parameter frame, the differential quantization and coding method is selected to be executed for the others, but other execution methods are not excluded.).

When the direct quantization and coding method is selected to be executed for a channel parameter frame, the frequency domain transformation 72 is performed on the current channel parameter frame, and quantization 73 is performed on a result of the frequency domain transformation, so as to obtain a directly quantized coefficient. Then, compressed feedback information is obtained after the directly quantized coefficient is coded; inverse quantization 74 and frequency domain inverse transformation 75 are performed on the directly quantized coefficient, and an obtained current channel parameter reconstructed frame 77 is saved in the buffer.

When the differential quantization and coding method is selected to be executed for a channel parameter frame, after a differential operation is performed on the channel parameter frame and a previous channel parameter reconstructed frame 76 in the buffer, the frequency domain transformation 72 is performed on the current channel parameter frame, the quantization 73 is performed on a result of the frequency domain transformation, and a residual quantized coefficient is obtained. Then, compressed feedback information is obtained after the residual quantized coefficient is coded; the inverse quantization 74 and the frequency domain inverse transformation 75 are performed on the residual quantized coefficient, and an obtained current channel parameter reconstructed frame 77 is saved in the buffer after an obtained result and the previous channel parameter reconstructed frame 76 are added.

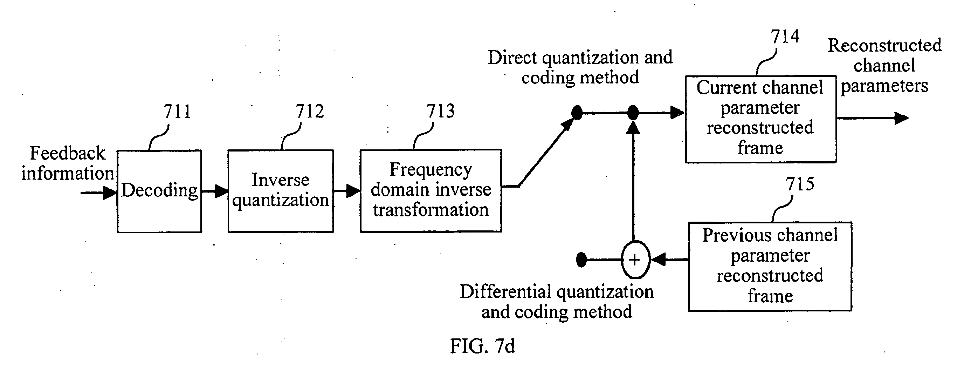

By summarizing the decompression steps in the embodiment of the present invention, the channel state information decompression process may be obtained. FIG 7d is a schematic diagram of a channel state information decompression process in the sixth embodiment of the channel state information processing method according to the present invention. As shown in FIG 7d, first, the base station performs decoding 711 on the received current feedback information, and performs inverse quantization 712 and frequency domain inverse transformation 713 on a decoded quantized coefficient after the decoding. If the feedback information is obtained by the UE by employing the direct quantization and coding method, an obtained result after the base station performs the frequency domain inverse transformation is a current channel parameter reconstructed frame 714. If the feedback information is obtained by the UE by employing the differential quantization and coding method, the current channel parameter reconstructed frame 714 is obtained after a result obtained after the base station performs the frequency domain inverse transformation and a previous channel parameter reconstructed frame 715 are added. Reconstructed channel parameters of a corresponding time-frequency location may be obtained after the current channel parameter reconstructed frame 714 is mapped.

In the embodiment, after converting the current channel state information into the current channel parameter frame, the terminal performs the frequency domain quantization on the current channel parameter frame, and codes the obtained quantized coefficient to obtain the feedback information, so as to eliminate relevant information of the channel state information in the time domain and the frequency domain, thereby dramatically reducing the amount of the feedback information, reducing the load of the feedback information, and improving compression efficiency at the same time of ensuring that the error of the reconstructed channel parameters is within an acceptable range.

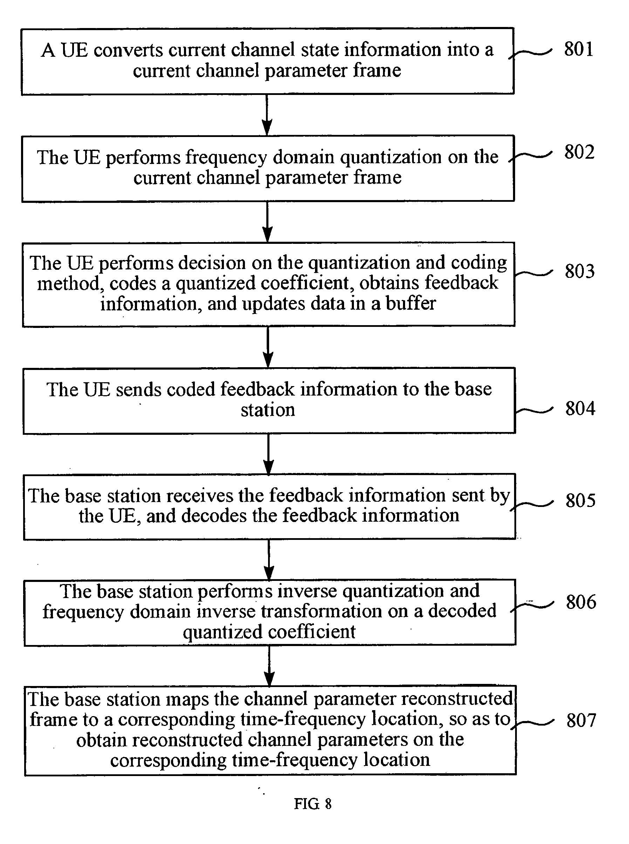

FIG 8 is a flow chart of a fifth embodiment of a channel state information processing method according to the present invention. As shown in FIG 8, the embodiment is different from the fourth embodiment of the channel state information processing method according to the present invention in that the channel state information processing method includes a detennining step of a quantization and coding method, and details are as follows:

The process in which a UE performs compression processing on channel state information is illustrated first.

Step 801: A UE converts current channel state information into a current channel parameter frame $H_{i,j}(n)$. For details, refer to step 701 in the fourth embodiment of the channel state information processing method according to the present invention and FIG 7b.

Step 802: The UE performs frequency domain quantization on the current channel parameter frame $H_{i,j}(n)$.

Step 803: The UE performs decision on the quantization and coding method, codes a quantized coefficient, obtains feedback information, and updates data in a buffer.

The frequency domain quantization and coding includes two methods: a direct quantization and coding method and a differential quantization and coding method. For details, refer to step 702 and step 703 in the fourth embodiment of the channel state information processing method according to the present invention.

In a cycle, it is assumed that a first channel parameter frame is currently compressed. The UE performs direct quantization on the first channel parameter frame $H_{i,j}(n)$ to obtain a directly quantized coefficient. When the current channel parameter frame is not the first frame, the UE codes the directly quantized coefficient, which is generated in step 802, of the first channel parameter frame; and meanwhile, performs inverse quantization and frequency domain inverse transformation on the directly quantized coefficient, where the number of points of the frequency domain inverse transformation is $N_{RB}$. A current first channel parameter reconstructed frame $H'_{i,j}(n)$ obtained after the frequency domain inverse transformation does not require the decision of the quantization and coding method to be performed, and the first first channel parameter reconstructed frame $H'_{i,j}(n)$ is directly saved in the buffer, and is for differential quantization and coding of a next channel parameter frame. If empirical data of the channel parameter reconstructed frame is pre-saved in the buffer, when the current channel parameter frame is not the first frame, the differential quantization and coding may be performed on the first channel parameter frame directly, and the decision of the quantization and coding method is executed. In the embodiment, an example is provided for illustration, in which the direct quantization and coding is performed only on the first channel parameter frame and the differential quantization and coding is performed on the channel parameter frames other than the first channel parameter frame, but the situation is not excluded, in which the direct quantization and coding or the differential quantization and coding is performed on all of the channel parameter frames.

In a cycle, it is assumed that the currently compressed is not the first channel parameter frame, the differential quantization and coding may be performed first, and the decision of the quantization and coding method may be performed. In step 802, the differential quantization and coding is performed on the channel parameter frame first, the UE performs a differential operation on the current channel parameter frame $H_{i,j}(n)$ and the previous first channel parameter reconstructed frame $H'_{i,j}(n-1)$ in the buffer, and performs frequency domain transformation and quantization, and then a residual quantized coefficient of the current channel parameter frame may be obtained. When the decision of the quantization and coding method is performed, the UE performs the inverse quantization and frequency domain inverse transformation on the residual quantized coefficient of the current channel parameter frame, where the number of points of the frequency domain transformation is $N_{RB}$, adds data, for example $H'_{i,j}(n-1)$, in the current buffer, obtains a current second channel parameter reconstructed frame $H'_{i,j}(n)$, and performs a mean square error (Mean Square Error; MSE for short) operation on the second channel parameter reconstructed frame $H'_{i,j}(n)$ and the original current channel parameter frame $H_{i,j}(n)$. A calculating fonnula is, for example, a formula (5):

$$MSE = 10\log\left(\frac{\sum_{n=1}^{N_{RB}}\left|H'_{i,j}(n) - H_{i,j}(n)\right|^2}{\sum_{n=1}^{N_{RB}}\left|H_{i,j}(n)\right|^2}\right) \quad (5).$$

It is assumed that a first mean square error value *MSE1* obtained through the formula (5) is greater than a set threshold *Thd*, step 802 is returned to be executed, the second channel parameter frame $H_{i,j}(n)$ is re-quantized by employing the direct quantization method, a first channel parameter reconstructed frame $H''_{i,j}(n)$ is obtained, a mean square error operation is performed on the first channel parameter reconstructed frame $H''_{i,j}(n)$ and the original second channel parameter frame $H_{i,j}(n)$, and a second mean square error value *MSE2* is obtained. *MSE1* and *MSE2* are compared, a quantized coefficient corresponding to a smaller mean square error value is coded. If *MSE1* is smaller, a residual quantized coefficient is coded, the data in the buffer is updated with the second channel parameter reconstructed frame $H'_{i,j}(n)$. If *MSE*2 is smaller, a directly quantized coefficient is coded, and the data in the buffer is updated with the first channel parameter reconstructed frame $H''_{i,j}(n)$. The data in the buffer is used for the differential quantization and coding method of a next channel parameter frame.

For example, the quantized coefficient may be coded to get information of *M* bits, one bit is added to indicate the quantization and coding method (for example, "1" indicates the differential quantization and coding method, and "0" indicates the direct quantization and coding method), and feedback information is formed and sent to the base station of the cell.

Step 804: The UE sends coded feedback information to the base station.

Then, the process, in which the base station performs decompression processing on the channel state information, is illustrated.

Step 805: The base station receives the feedback information sent by the UE, and decodes the feedback information.

After receiving the feedback information transmitted by the UE, the base station may read the information of $M + 1$ bits in sequence each time, where M bits are valid information, 1 bit is the quantization and coding method, the quantization and coding method of the current channel parameter frame is obtained by parsing, the remaining information of $M$ bits is decoded, and the quantized coefficient is obtained.

Step 806: The base station performs inverse quantization and frequency domain inverse transformation on a decoded quantized coefficient.

If it is the direct quantization and coding method, inverse quantization and frequency domain inverse transformation are performed on the quantized coefficient decoded in step 805, the number of points of the frequency domain inverse transformation is $N_{RB}$, a corresponding channel parameter reconstructed frame $H'_{i,j}(n)$ is obtained, and the buffer is updated with the channel parameter reconstructed frame.

If it is the differential quantization and coding method, inverse quantization and frequency domain inverse transformation are performed on the quantized coefficient decoded in step 805, the number of points of the frequency domain inverse transformation is $N_{RB}$, a differential reconstructed matrix is obtained, the differential reconstructed matrix and the channel parameter reconstructed frame $H'_{i,j}(n-1)$ in the buffer are added to obtain a corresponding channel parameter reconstructed frame $H'_{i,j}(n)$, and the buffer is updated with $H'_{i,j}(n)$.

Step 807: The base station maps the channel parameter reconstructed frame to a corresponding time-frequency location, so as to obtain reconstructed channel parameters on the corresponding time-frequency location. For details, refer to step 707 in the fourth embodiment of the channel state information processing method according to the present invention.

In the embodiment, after converting the current channel state information into the current channel parameter frame, the terminal performs the frequency domain quantization on the current channel parameter frame, and codes the obtained quantized coefficient to obtain the feedback information, so as to eliminate relevant information of the channel state information in the time domain and the frequency domain, thereby decreasing the number of bits of the feedback information and increasing compression efficiency without decreasing compression accuracy. The quantization and coding method decision is performed, so as to reduce the error and improve the accuracy of a compression result.

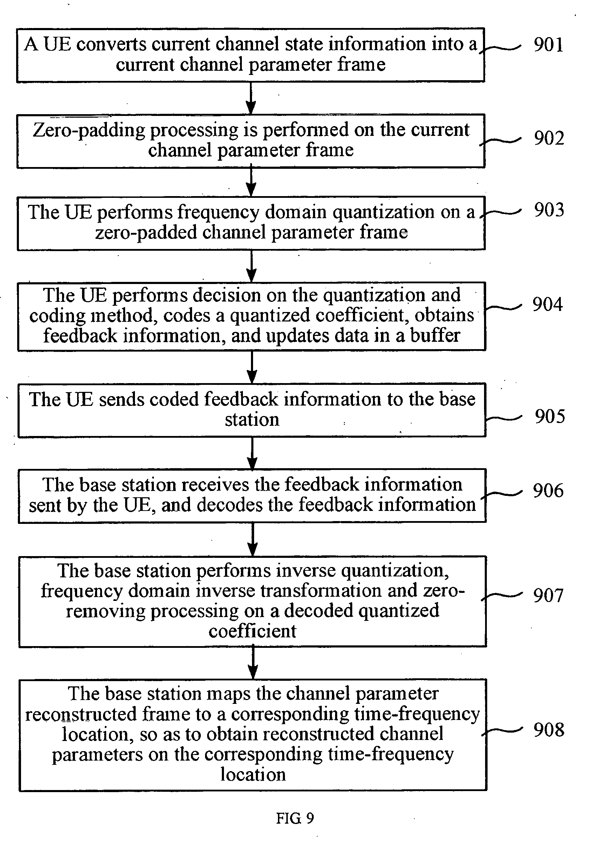

FIG 9 is a flow chart of the sixth embodiment of a channel state information processing method according to the present invention. As shown in FIG 9, the embodiment is different from the fifth embodiment of the channel state information processing method according to the present invention in that the channel state information processing method further includes a step of zero-padding processing, and details are as follows:

Step 901: A UE converts current channel state information into a current channel parameter frame $H_{i,j}(n)$. For details, refer to step 701 in the fourth embodiment of the channel state information processing method according to the present invention and FIG 7b.

Step 902: Perform Zero-padding processing on the current channel parameter frame $H_{i,j}(n)$. It is assumed that, currently the number of elements in $H_{i,j}(n)$ is $1 \times N_{RB}$ and $1 \times N_{RB}$ is converted into $1 \times N'_{RB}$. If the current channel parameter frame is not the first frame, that is, $n > 1$, zero-padding processing is further required to be performed on a previous channel parameter reconstructed frame $H'_{i,j}(n-1)$ in the buffer.

$N'_{RB}$ is the smallest power series of 2 which is greater than $N_{RB}$, for example, when $N_{RB} = 50$ $N'_{RB}$ is 64. In addition, zero padding may start from the last element of $H_{i,j}(n)$, or padding is performed before the first element of $H_{i,j}(n)$, or zero padding may be performed alternately, where the first two manners are exemplary

Step 903: The UE performs frequency domain quantization on a zero-padded channel parameter frame $H_{i,j}(n_0)$.

Step 904: The UE performs decision on the quantization and coding method, codes a quantized coefficient, obtains feedback information, and updates data in a buffer.

The frequency domain quantization and coding includes two methods: a direct quantization and coding method and a differential quantization and coding method. Details are as follows:

A process of the direct quantization and coding is as follows: The UE performs frequency domain transformation on the current zero-padded channel parameter frame $H_{i,j}(n_0)$ directly. The number of points of the frequency domain transformation is $N'_{RB}$. The frequency domain transformation may be the DFT, DCT or DWT, and so on. Then, quantization is performed on a frequency domain coefficient obtained through the frequency domain transformation, and a quantized coefficient obtained after the frequency domain quantization is coded.

Differential quantization process coding is as follows: The UE performs a differential operation on the current zero-padded channel parameter frame $H_{i,j}(n_0)$ and a previous zero-padded channel parameter reconstructed frame $H'_{i,j}(n_0 - 1)$. It should be noted that, when the compression subject is a unit value (that is, a modulus of a coefficient of a channel parameter frame is 1), the differential operation employs a coefficient division method, that is, phase subtraction. Frequency domain transformation is performed on the residual obtained through the differential. In this case, the number of points of the frequency domain transformation is $N'_{RB}$. Quantization, quantization, is performed on a coefficient obtained through the frequency domain transformation. The quantized coefficient obtained after the frequency domain quantization is coded.

In a cycle, it is assumed that a first channel parameter frame is currently compressed. The UE performs zero-padding processing on the first channel parameter frame $H_{i,j}(n)$, performs frequency domain transformation and quantization, and obtains a directly quantized coefficient. When the current channel parameter frame is not the first frame, the UE codes the directly quantized coefficient, which is generated in step 903, of the first channel parameter frame; and meanwhile, performs inverse quantization and frequency domain inverse transformation on the quantized coefficient, where the number of points of the frequency domain inverse transformation is $N'_{RB}$. A coefficient, which is in a result of the frequency domain transformation and in corresponding non zero-padding positions in step 902, is used as a current first first channel parameter reconstructed frame $H'_{i,j}(n)$. The channel parameter reconstructed frame $H'_{i,j}(n)$ is saved in the buffer, and is used for differential quantization and coding of a next channel parameter frame. If empirical data of the channel parameter reconstructed frame is pre-saved in the buffer, when the current channel parameter frame is not the first frame, the differential quantization and coding may be performed on the first channel parameter frame directly, and the decision of the quantization and coding method is executed. In the embodiment, an example is provided for illustration, in which the direct quantization and coding is performed only on the first channel parameter frame and the differential quantization and coding is performed on the channel parameter frames other than the first one, but the situation is not excluded, in which the direct quantization and coding or the differential quantization and coding is performed on all of the channel parameter frames.

In a cycle, it is assumed that the currently compressed is not the first channel parameter frame, the decision of the quantization and coding method is required to be performed, and in step 903 the differential quantization and coding is performed on the channel parameter frame first to obtain a residual quantized coefficient of the current channel parameter frame. When the decision of the quantization and coding method is performed, the UE performs the quantization and frequency domain inverse transformation on the residual quantized coefficient of the current channel parameter frame, where the number of points of the frequency domain transformation is $N'_{RB}$, adds a previous channel parameter reconstructed frame $H'_{i,j}(n-1)$ in the current buffer, takes out a coefficient, which is in the result and in the corresponding non zero-padding positions in step 902, obtains a current second channel parameter reconstructed frame $H'_{i,j}(n)$, and performs a mean square error (MSE) operation on the second channel parameter reconstructed frame $H'_{i,j}(n)$ and the original current channel parameter frame $H_{i,j}(n)$. The formula (5) in the above embodiment may serve as a reference for the calculating formula.

It is assumed that a first mean square error value *MSE1* obtained through the formula (5) is greater than a set threshold *Thd*, step 903 is returned to be executed, the second channel parameter frame $H_{i,j}(n)$ is re-quantized by employing the direct quantization method, the coefficient, which is in the result and in the corresponding non zero-padding positions in step 902, is taken out, a current first channel parameter reconstructed frame $H_{i,j}^{"}(n)$ is obtained, a mean square error operation is performed on the first channel parameter reconstructed frame $H_{i,j}^{"}(n)$ and the original second channel parameter frame $H_{i,j}(n)$, and a second mean square error value *MSE2* is obtained. *MSE1* and *MSE2* are compared, a quantized coefficient corresponding to a smaller mean square error value is coded. If *MSE1* is smaller, a residual quantized coefficient is coded, the data in the buffer is updated with the second channel parameter reconstructed frame $H_{i,j}^{'}(n)$. If *MSE2* is smaller, a directly quantized coefficient is coded, and the data in the buffer is updated with the first channel parameter reconstructed frame $H_{i,j}^{"}(n)$. The data in the buffer is used for the differential quantization and coding of a next channel parameter frame.

Step 905: The UE sends coded feedback information to the base station.

Then, the process in which the base station performs decompression processing on the channel state information is illustrated.

Step 906: The base station receives the feedback information sent by the UE, and decodes the feedback information.

After receiving the feedback information transmitted by the UE, the base station may read the information of *M* + 1 bits in sequence each time, where M bits are valid information, 1 bit is the quantization and coding method, the quantization and coding method of the current channel parameter frame is obtained by parsing, the remaining information of *M* bits is decoded, and the quantized coefficient is obtained.

Step 907: The base station performs inverse quantization, frequency domain inverse transformation and zero-removing processing on a decoded quantized coefficient.

According to the quantization and coding method obtained in step 906, if it is the direct quantization and coding method, the inverse quantization and frequency domain inverse transformation are performed on the quantized coefficient decoded in step 906, the number of points of the frequency domain inverse transformation is $N_{RB}^{'}$, a coefficient, which is in a matrix obtained after the frequency domain inverse transformation and corresponds to the non zero-padding positions in step 902, is taken out to form a new matrix used as a channel parameter reconstructed frame $H_{i,j}^{'}(n)$, and the buffer is updated with the channel parameter reconstructed frame.

If it is the differential quantization and coding method, the inverse quantization and frequency domain inverse transformation are performed on the quantized coefficient decoded in step 906, the number of points of the frequency domain inverse transformation is $N_{RB}^{'}$, a coefficient, which is in a matrix obtained after the frequency domain inverse transformation and corresponds to the non zero-padding positions in step 902, is taken out to form a new matrix used as a differential reconstructed matrix, the differential reconstructed matrix and the previous channel parameter reconstructed frame $H_{i,j}^{'}(n-1)$ in the buffer are added to obtain a current channel parameter reconstructed frame $H_{i,j}^{'}(n)$, and the buffer is updated with the current channel parameter reconstructed frame $H_{i,j}^{'}(n)$.

Step 908: The base station maps the channel parameter reconstructed frame to a corresponding time-frequency location, so as to obtain reconstructed channel parameters on the corresponding time-frequency location. For details, refer to step 707 in the fourth embodiment of the channel state information processing method according to the present invention.

In the embodiment, after converting the current channel state information into the current channel parameter frame, the terminal performs the frequency domain quantization on the current channel parameter frame, and codes the obtained quantized coefficient to obtain the feedback information, so as to eliminate relevant information of the channel state information in the time domain and the frequency domain, thereby decreasing the number of bits of the feedback information and increasing compression efficiency without decreasing compression accuracy. The quantization and coding method decision is performed, so as to reduce the error and improve the accuracy of a compression result. The zero-padding processing of the channel parameter frame may implement fast Fourier transform, reduce the value range of the frequency domain coefficient, and prevent the case that an overload situation occurs in the quantization process.

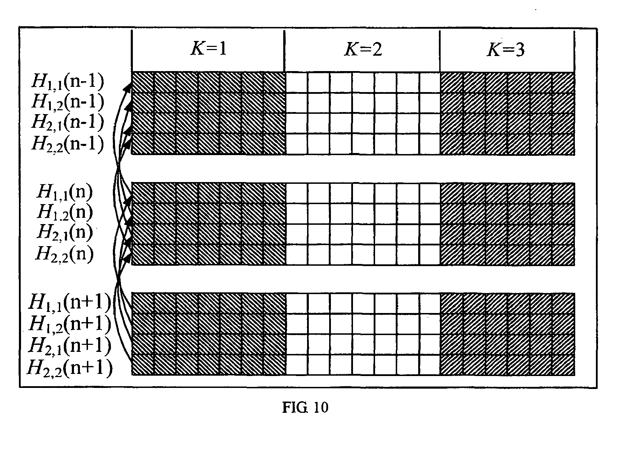

FIG. 10 is a schematic diagram of a channel parameter frame taking into account of a spatial correlation in a seventh embodiment of a channel state information processing method according to the present invention. The embodiment is different from the above embodiment of the channel state information processing method in that, a correlation between antennas is taken into account during compression. When a channel parameter frame is constructed, $N_R \times N_T$ elements in a channel parameter matrix $H$ of each antenna at each moment are arranged into a channel parameter frame in sequence according to an order. For example, it is assumed that the antennas are configured to be $2\times2$, the channel parameter frame is a formula (6):

$$H(n) = \begin{bmatrix} H_{1,1}(n,1) \, H_{1,1}(n,2) \, H_{1,1}(n,3) \dots H_{1,1}(n,N_{RB}) \\ H_{1,2}(n,1) \, H_{1,2}(n,2) \, H_{1,2}(n,3) \dots H_{1,2}(n,N_{RB}) \\ H_{2,1}(n,1) \, H_{2,1}(n,2) \, H_{2,1}(n,3) \dots H_{2,1}(n,N_{RB}) \\ H_{2,2}(n,1) \, H_{2,2}(n,2) \, H_{2,2}(n,3) \dots H_{2,2}(n,N_{RB}) \end{bmatrix} \quad (4).$$

For example, $N_{RB} = 20$ and $K = 3$, so that a constructed channel parameter frame is as shown in FIG 10.

During compression and decompression processing of a channel parameter frame, the method in the fourth to sixth embodiments of the channel state information processing method according to the present invention may be employed, but the number of points of the frequency domain transformation/frequency domain inverse transformation is $N_R \times N_T \times N'_{RB}$.

In the embodiment, the frequency domain quantization is performed on the current channel parameter frame, and the obtained quantized coefficient is coded to obtain the feedback information, so as to eliminate relevant information of the channel state information in the time domain, the frequency domain and the spatial domain, thereby decreasing the number of bits of the feedback information and improving compression efficiency without decreasing compression accuracy.

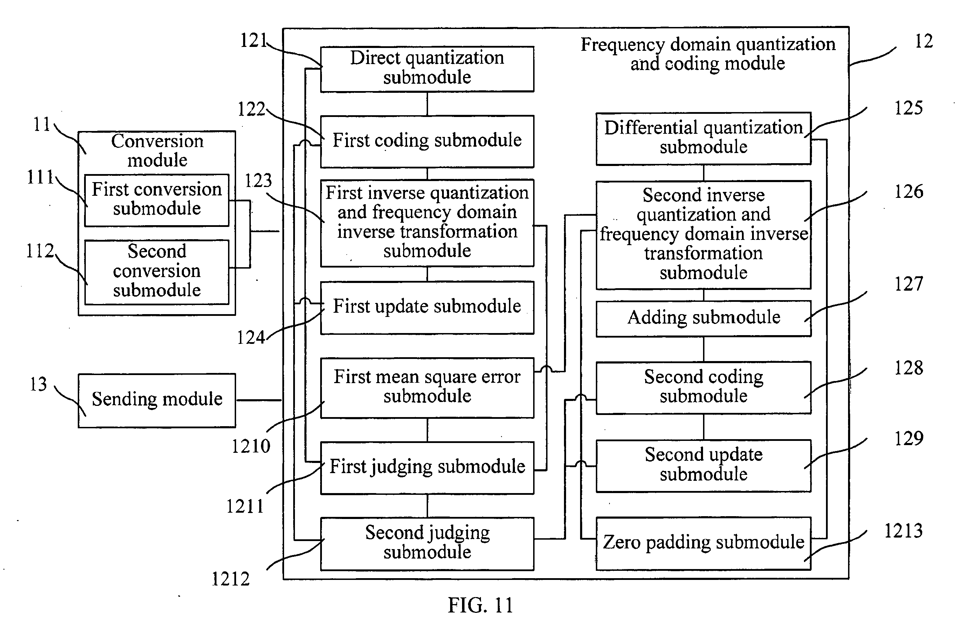

FIG 11 is a schematic structural diagram of an embodiment of a terminal according to the present invention. As shown in FIG 11, the terminal includes: a conversion module 11, a frequency domain quantization and coding module 12 and a sending module 13.

The conversion module 11 is configured to convert current channel state information into a current channel parameter frame.

The frequency domain quantization and coding module 12 is configured to perform frequency domain quantization and coding on the current channel parameter frame to obtain feedback information.

The sending module 13 is configured to send the feedback information to a base station.

Specifically, the terminal may measure channel state information required to be fed back to the base station. The channel state information may be compressed in time, frequency and space dimensions. The conversion module 11 of the terminal may convert the current channel state information into one or more current channel parameter frames. A quantization and coding method used by the conversion module 11 to perform the frequency domain quantization and coding on the channel parameter frame may include: a direct quantization and coding method and/or a differential quantization and coding method. For details, refer to relevant descriptions of the quantization and coding method in the first embodiment to the seventh embodiment of the channel state information processing method according to the present invention. The sending module may code a quantized coefficient after the frequency domain quantization, for example, code the quantized coefficient of each channel parameter frame to obtain feedback infonnation of M bits, and add 1 bit for indicating the quantization and coding method of each channel parameter frame to the information of M bits, where the feedback information is M+1 bits, and then send the feedback information to the base station.

Further, the frequency domain quantization and coding module 12 may perform the frequency domain quantization on the current channel parameter frame by employing the direct quantization and coding method, and in the case the frequency domain quantization and coding module 12 may include:

a direct quantization submodule 121, configured to obtain a directly quantized coefficient after performing the frequency domain transformation and quantization on the current channel parameter frame;

a first coding submodule 122, configured to code the directly quantized coefficient;

a first inverse quantization and frequency domain inverse transformation submodule 123, configured to perform inverse quantization and frequency domain inverse transfonnation on the directly quantized coefficient to obtain a first channel parameter reconstructed frame of the current channel state information; and

a first update submodule 124, configured to update data saved in a buffer with the first channel parameter reconstructed frame.

For the specific method used by the direct quantization submodule 121, the first coding submodule 122, the first inverse quantization and frequency domain inverse transformation submodule 123 and the first update submodule 124 to perform the direct quantization and coding on the current channel parameter frame, refer to relevant descriptions of the direct quantization and coding in the first, second, and fourth to seventh embodiments of the channel state information processing method according to the present invention.

Further, the frequency domain quantization and coding module 12 may perform the frequency domain quantization on the current channel parameter frame by employing the differential quantization and coding method, so that the frequency domain quantization and coding module 12 may further include:

a differential quantization submodule 125, configured to obtain a residual quantized coefficient after performing a differential operation, frequency transformation and quantization on the current channel parameter frame according to the data saved in the buffer;

a second inverse quantization and frequency domain inverse transformation submodule 126, configured to perform inverse quantization and frequency domain inverse transformation on the residual quantized coefficient to obtain a reconstructed residual of the current channel state information;

an adding submodule 127, configured to obtain a second channel parameter reconstructed frame of the current channel state information after adding the reconstructed residual and the data saved in the buffer;

a second coding submodule 128, configured to code the residual quantized coefficient; and

a second update submodule 129, configured to update the data saved in the buffer with the second channel parameter reconstructed frame.

For the specific method used by the differential quantization submodule 125, the second inverse quantization and frequency domain inverse transformation submodule 126, the adding submodule 127, the second coding submodule 128 and the second update submodule 129 to perform the direct quantization and coding on the current channel parameter frame, refer to relevant descriptions of the differential quantization and coding in the first, second, and fourth to seventh embodiments of the channel state information processing method according to the present invention.

Further, when the frequency domain quantization and coding module performs the frequency domain quantization on the current channel parameter frame, the employed quantization and coding method may be selected through the quantization and coding method decision, so that the frequency domain quantization and coding module 12 may further include:

a first mean square error submodule 1210, configured to obtain a first mean square error value of the second channel parameter reconstructed frame and the current channel parameter frame;

a first judging submodule 1211, configured to judge whether the first mean square error value is greater than a set threshold, where if the first mean square error value is greater than the set threshold, after the direct quantization submodule 121 performs the frequency domain transformation and quantization on the current channel parameter frame, the directly quantized coefficient is obtained; after the first inverse quantization and frequency domain inverse transformation submodule 123 obtains the first channel parameter reconstructed frame according to the directly quantized coefficient, a second mean square error value of the first channel parameter reconstructed frame and the current channel parameter frame is obtained; and

a second judging submodule 1212, configured to judge whether the second mean square error value is smaller than the first mean square error value, where if the second mean square error value is smaller than the first mean square error value, the first coding submodule 122 codes the directly quantized coefficient, the first update submodule 124 updates the data saved in the buffer with the first channel parameter reconstructed frame; if the second mean square error value is not smaller than the first mean square error value, the second coding submodule 128 codes the residual quantized coefficient, and the second update submodule 129 updates the data saved in the buffer with the second channel parameter reconstructed frame.

For the specific method used by the first mean square error submodule 1210, the first judging submodule 1211 and the second judging submodule 1212 to perform the quantization and coding method decision during the differential quantization and coding of the current channel parameter frame, refer to relevant descriptions of the quantization and coding method in the first, second, and fourth to seventh embodiments of the channel state information processing method according to the present invention.

In order to facilitate implementation of the fast Fourier transform, reduce the value range of the frequency domain coefficient, and prevent the case that an overload situation occurs in the quantization process, when the frequency domain quantization and coding module performs the frequency domain quantization on the current channel parameter frame, zero-padding processing may be performed on the channel parameter frame, so that the frequency domain quantization and coding module 12 may further include: a zero padding submodule 1213, configured to perform zero-padding processing on the current channel parameter frame to obtain a current zero-padded channel parameter frame.

In the case, the direct quantization submodule 121 is further configured to obtain a directly quantized coefficient after performing the frequency domain transformation and quantization on the current zero-padded channel parameter frame.

The first inverse quantization and frequency domain inverse transformation submodule 123 is further configured to perform the inverse quantization and frequency domain inverse transformation on the directly quantized coefficient, and use a calculation result of non zero-padding bits as the first channel parameter reconstructed frame of the current channel state information.

The differential quantization submodule 125 is further configured to obtain a residual quantized coefficient after performing the differential operation, frequency transformation and quantization on the current zero-padded channel parameter frame according to the data saved in the buffer.

The second inverse quantization and frequency domain inverse transformation submodule 126 is further configured to perform the inverse quantization and frequency domain inverse transformation on the residual quantized coefficient, and use a calculation result of non zero-padding bits as a reconstructed residual of the current channel state information.

For the specific method used by the zero padding submodule 1213, the direct quantization submodule 121, the first inverse quantization and frequency domain inverse transformation submodule 123, the differential quantization submodule 125 and the second inverse quantization and frequency domain inverse transformation submodule 126 to perform the zero-padding processing during the frequency domain quantization of the current channel parameter frame, refer to relevant descriptions of the zero-padding processing in the first to seventh embodiments of the channel state information processing method according to the present invention.

In addition, the conversion module 11 may include a first conversion submodule 111 and/or a second conversion submodule 112.

The first conversion submodule 111 is configured to convert all the current channel state information into a current channel parameter frame.

The second conversion submodule 112 is configured to divide the current channel state information into more than one current channel parameter frame according to a set rule.

The sending module 13 may be configured to send feedback information of the channel state information which is obtained by performing the coding to the base station, and the feedback information includes the bit for indicating the quantization and coding method.

In the embodiment, after the conversion module converts the current channel state information into the current channel parameter frame, the frequency domain quantization and coding module performs the frequency domain quantization on the current channel parameter frame, and the sending module codes the obtained quantized coefficient to obtain the feedback information, and then sends the feedback information to the base station, so as to eliminate relevant information of the channel state information in the time domain, the frequency domain and the spatial domain, thereby decreasing the number of bits of the feedback information and improving compression efficiency without decreasing compression accuracy.

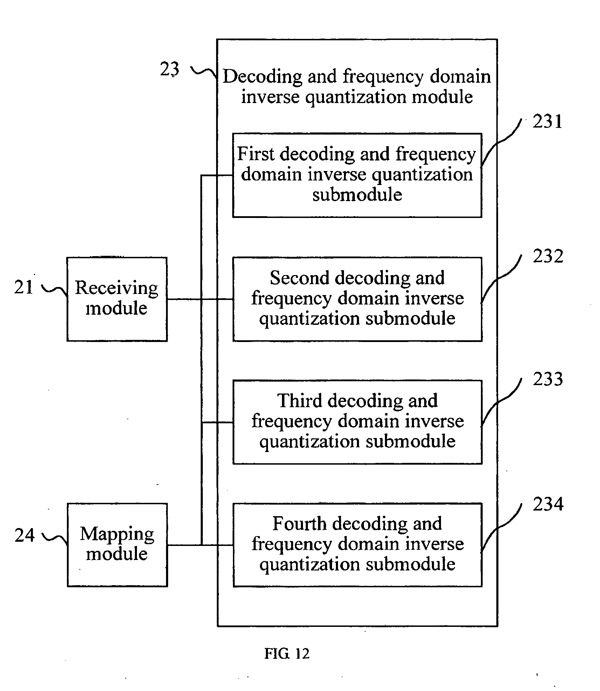

FIG 12 is a schematic structural diagram of an embodiment of a base station according to the present invention. As shown in FIG 12, the base station includes: a receiving module 21, a decoding and frequency domain inverse quantization module 23 and a mapping module 24.

The receiving module 21 is configured to receive current feedback information, which is sent by a terminal and corresponds to channel state information.

The decoding and frequency domain inverse quantization module 23 is configured to perform decoding and frequency domain inverse quantization on the current feedback information, so as to obtain a current channel parameter reconstructed frame.

The mapping module 24 is configured to obtain channel state information of a corresponding time-frequency location by mapping according to the current channel parameter reconstructed frame.

Specifically, after the receiving module 21 of the base station receives the current feedback information which is sent by the terminal and corresponds to the channel state information, the decoding and frequency domain inverse quantization module 23 decodes the current feedback information, and obtains a quantized coefficient. The terminal may further obtain the quantization and coding method, which includes a direct quantization and coding method and a differential quantization and coding method. The decoding and frequency domain inverse quantization module 23 may perform frequency domain inverse quantization on the quantized coefficient according to the quantization and coding method to obtain a current channel parameter reconstructed frame. The mapping module 24 may obtain the channel state information of a corresponding time-frequency location by mapping according to the current channel parameter reconstructed frame.

Further, if the terminal does not employ zero-padding processing during the frequency domain quantization of the channel parameter frame, the decoding and frequency domain inverse quantization module 23 may include a first decoding and frequency domain inverse quantization submodule 231 and a second decoding and frequency domain inverse quantization submodule 232.

The first decoding and frequency domain inverse quantization submodule 231 is configured to perform decoding, inverse quantization and frequency domain inverse transformation on the current feedback information to obtain a current channel parameter reconstructed frame if the quantization and coding method is the direct quantization and coding method, and update data saved in a buffer with the current channel parameter reconstructed frame.

The second decoding and frequency domain inverse quantization submodule 232 is configured to perform decoding, inverse quantization and frequency domain inverse transformation on the current feedback information to obtain a reconstructed residual if the quantization and coding method is the differential quantization and coding method, obtain a current channel parameter reconstructed frame after adding the reconstructed residual and the data saved in the buffer, and update the data saved in the buffer with the current channel parameter reconstructed frame.

If the terminal employs the zero-padding processing during the frequency domain quantization of the channel parameter frame, the quantized coefficient is data that undergoes the zero-padding processing, and the decoding and frequency domain inverse quantization module 23 may include a third decoding and frequency domain inverse quantization submodule 233 and/or a fourth decoding and frequency domain inverse quantization submodule 234.

The third decoding and frequency domain inverse quantization submodule 233 is configured to perform decoding, inverse quantization and frequency domain inverse transformation on the current feedback information if the quantization and coding method is the direct quantization and coding method, use a calculation result of non zero-padding bits as a current channel parameter reconstructed frame, and update the data saved in the buffer with the current channel parameter reconstructed frame.

The fourth decoding and frequency domain inverse quantization submodule 234 is configured to perform decoding, inverse quantization and frequency domain inverse transformation on the current feedback information if the quantization and coding method is the differential quantization and coding method, use a calculation result of non zero-padding bits as a reconstructed residual, obtain a current channel parameter reconstructed frame after adding the reconstructed residual and the data saved in the buffer, and update the data saved in the buffer with the current channel parameter reconstructed frame.

For details, refer to relevant descriptions in the third to seventh embodiments of the channel state information processing method according to the present invention.

In the embodiment, the terminal eliminates relevant information of the channel station information in the time domain, the frequency domain and the spatial domain when compressing the channel state information, thereby decreasing the number of bits of the feedback information and improving compression efficiency without decreasing compression accuracy. After the receiving module of the base station receives the current feedback information which is sent by the terminal and corresponds to the channel state information, the decoding and frequency domain inverse quantization module may decode the current feedback information and perform the frequency domain inverse quantization on the obtained quantized coefficient, so as to obtain the current channel parameter reconstructed frame, so that the mapping module may accurately obtain the channel state information of the corresponding time-frequency location, thereby achieving high decompression efficiency.

Those skilled in the art should understand that all or a part of the steps of the method according to the embodiments may be implemented by a program instructing relevant hardware. The program may be stored in a computer readable storage medium. When the program is run, the steps of the method according to the embodiments are performed. The storage medium may be any medium that is capable of storing program codes, such as a ROM, a RAM, a magnetic disk, and an optical disk.

**Claims**

1. A method for processing channel state information, comprising:

    converting (201) current channel state information into a current channel parameter frame, wherein the current channel parameter frame is a matrix of 1 x $N_{RB}$ that contains in each matrix element channel state information of one channel;

obtaining (202) feedback information after performing frequency domain quantization and coding, wherein the frequency domain quantization comprises frequency domain transformation and quantization, and wherein the frequency domain quantization and coding includes a direct quantization and coding method performed on the current channel parameter frame and a differential quantization and coding method performed on the current channel parameter frame and a previous channel parameter frame; and
sending (203) the feedback information to a base station.

2. The channel state information processing method according to claim 1, wherein the performing the frequency domain quantization and coding on the current channel parameter frame comprises:

obtaining a directly quantized coefficient after performing the frequency domain transformation and quantization on the current channel parameter frame;
coding the directly quantized coefficient, and performing inverse quantization and frequency domain inverse transformation on the directly quantized coefficient, so as to obtain a first channel parameter reconstructed frame of the current channel state information; and
updating data saved in a buffer with the first channel parameter reconstructed frame.

3. The channel state information processing method according to claim 1 or 2, a process of the quantization comprises: searching a quantization codebook for a codeword which has the shortest Euclidean distance to a frequency domain coefficient obtained through the frequency domain transformation, and using the code word as a quantization result.

4. The channel state information processing method according to any one of claims 1 to 3, wherein the performing the frequency domain quantization and coding on the current channel parameter frame further comprises:

obtaining a residual quantized coefficient after performing a differential operation, frequency transformation and quantization on the current channel parameter frame according to the data saved in the buffer;
performing the inverse quantization and frequency domain inverse transformation on the residual quantized coefficient, so as to obtain a reconstructed residual of the current channel state information;
obtaining a second channel parameter reconstructed frame of the current channel state information after adding the reconstructed residual and the data saved in the buffer; and
coding the residual quantized coefficient, and updating the data saved in the buffer with the second channel parameter reconstructed frame.

5. The channel state information processing method according to any one of claims 1 to 4, wherein the performing the frequency domain quantization and coding on the current channel parameter frame further comprises:

obtaining a residual quantized coefficient after performing a differential operation, frequency transformation and quantization on the current channel parameter frame according to the data saved in the buffer;
performing the inverse quantization and frequency domain inverse transformation on the residual quantized coefficient, so as to obtain a reconstructed residual of the current channel state information;
obtaining a second channel parameter reconstructed frame of the current channel state information after adding the reconstructed residual and the data saved in the buffer; and
obtaining a first mean square error value of the second channel parameter reconstructed frame and the current channel parameter frame;
if the first mean square error value is greater than a set threshold, obtaining the directly quantized coefficient after performing the frequency domain transformation and quantization on the current channel parameter frame, obtaining the first channel parameter reconstructed frame according to the directly quantized coefficient, and obtaining a second mean square error value of the first channel parameter reconstructed frame and the current channel parameter frame; judging whether the second mean square error value is smaller than the first mean square error value, coding the directly quantized coefficient, and updating the data saved in the buffer with the first channel parameter reconstructed frame if the second mean square error value is smaller than the first mean square error value; coding the residual quantized coefficient if the second mean square error value is not smaller than the first mean square error value, and updating the data saved in the buffer with the second channel parameter reconstructed frame; and
if the first mean square error value is smaller than the set threshold, coding the residual quantized coefficient, and updating the data saved in the buffer with the second channel parameter reconstructed frame.

6. The channel state information processing method according to one of the claims 1 to 5, wherein after the converting the current channel state information into the current channel parameter frame, the performing the frequency domain quantization and coding on the current channel parameter frame comprises:

performing zero-padding processing on the current channel parameter frame, so as to obtain a current zero-padded channel parameter frame.

7. The channel state information processing method according to claim 6, wherein the performing the frequency domain quantization and coding on the current channel parameter frame further comprises:

obtaining a directly quantized coefficient after performing the frequency domain transformation and quantization on the current zero-padded channel parameter frame;
coding the directly quantized coefficient, performing inverse quantization and frequency domain inverse transformation on the directly quantized coefficient, and taking a calculation result of non zero-padding bits as a first channel parameter reconstructed frame of the current channel state information; and
updating the data saved in the buffer with the first channel parameter reconstructed frame.

8. The channel state information processing method according to claim 6 or 7, wherein the performing the frequency domain quantization and coding on the current channel parameter frame further comprises:

obtaining a residual quantized coefficient after performing a differential operation, frequency transformation and quantization on the current zero-padded channel parameter frame according to the data saved in the buffer;
performing the inverse quantization and frequency domain inverse transformation on the residual quantized coefficient, and using a calculation result of non zero-padding bits as a reconstructed residual of the current channel state information;
obtaining a second channel parameter reconstructed frame of the current channel state information after adding the reconstructed residual and the data saved in the buffer; and
obtaining a first mean square error value of the second channel parameter reconstructed frame and the current channel parameter frame;
if the first mean square error value is greater than a set threshold, obtaining a directly quantized coefficient after performing the frequency domain transformation and quantization on the current zero-padded channel parameter frame, performing the inverse quantization and frequency domain inverse transformation on the directly quantized coefficient, using a calculation result of non zero-padding bits as a first channel parameter reconstructed frame of the current channel state information, obtaining a second mean square error value of the first channel parameter reconstructed frame and the current channel parameter frame; judging whether the second mean square error value is smaller than the first mean square error value, coding the directly quantized coefficient if the second mean square error value is smaller than the first mean square error value, and updating the data saved in the buffer with the first channel parameter reconstructed frame; coding the residual quantized coefficient if the second mean square error value is not smaller than the first mean square error value, and updating the data saved in the buffer with the second channel parameter reconstructed frame; and
if the first mean square error value is smaller than the set threshold, coding the residual quantized coefficient, and updating the data saved in the buffer with the second channel parameter reconstructed frame.

9. The channel state information processing method according to any one of claims 1 to 8, wherein the sending the feedback information to the base station comprises:

sending feedback information of the channel state information which is obtained by performing the coding to the base station, wherein the feedback information comprises a bit for indicating a quantization and coding method.

10. A method for processing channel state information, comprising:

Receiving (601) current feedback information which is sent by a terminal and corresponds to channel state information;
performing (602) decoding and frequency domain inverse quantization on the current feedback information to obtain a current channel parameter reconstructed frame, wherein the current channel parameter reconstructed frame is a matrix of 1 x $N_{RB}$ that contains in each matrix element channel state information of one channel; and
obtaining (603) the channel state information of a corresponding time-frequency location by mapping according to the current channel parameter reconstructed frame;

wherein before the performing the decoding and frequency domain inverse quantization on the current feedback information, the method comprises:

obtaining a quantization and coding method including a direct quantization and coding method performed on the current channel parameter frame and a differential quantization and coding method performed on the current channel parameter frame and a previous channel parameter frame.

11. The channel state information processing method according to claim 10, wherein the performing the decoding and frequency domain inverse quantization on the current feedback information to obtain the current channel parameter reconstructed frame comprises:

if the quantization and coding method is the direct quantization and coding method, performing decoding, inverse quantization and frequency domain inverse transformation on the current feedback information to obtain the current channel parameter reconstructed frame, and updating data saved in a buffer with the current channel parameter reconstructed frame; or

if the quantization and coding method is the differential quantization and coding method, performing decoding, inverse quantization and frequency domain inverse transformation on the current feedback information to obtain a reconstructed residual, obtaining the current channel parameter reconstructed frame after adding the reconstructed residual and the data saved in a buffer, and updating the data saved in the buffer with the current channel parameter reconstructed frame.

12. The channel state information processing method according to claim 10 or 11, wherein if a quantized coefficient is data that undergoes zero-padding processing, the performing the decoding and frequency domain inverse quantization on the current feedback information to obtain the current channel parameter reconstructed frame comprises:

if the quantization and coding method is the direct quantization and coding method, performing decoding, inverse quantization and frequency domain inverse transformation on the current feedback information, using a calculation result of non zero-padding bits as the current channel parameter reconstructed frame, and updating data saved in a buffer with the current channel parameter reconstructed frame; or

if the quantization and coding method is the differential quantization and coding method, performing decoding, inverse quantization and frequency domain inverse transformation on the current feedback information, using a calculation result of non zero-padding bits as a reconstructed residual, obtaining the current channel parameter reconstructed frame after adding the reconstructed residual and the data saved in the buffer, and updating data saved in a buffer with the current channel parameter reconstructed frame.

13. A terminal, comprising:

a conversion module, configured to convert current channel state information into a current channel parameter frame, wherein the current channel parameter frame is a matrix of 1 x $N_{RB}$ that contains in each matrix element channel state information of one channel;

a frequency domain quantization and coding module (12), configured to perform frequency domain quantization and coding on the current channel parameter frame to obtain feedback information, wherein the frequency domain quantization comprises frequency domain transformation and quantization;

a direct quantization submodule (121), configured to obtain a directly quantized coefficient after performing the frequency domain transformation and quantization on the current channel parameter frame;

a differential quantization submodule (125), configured to obtain a residual quantized coefficient after performing a differential operation, frequency transformation and quantization on the current channel parameter frame and a previous channel parameter frame according to the data saved in the buffer; and

a sending module (13), configured to send the feedback information to a base station.

14. The terminal according to claim 13, wherein the frequency domain quantization and coding module comprises:

a first coding submodule, configured to code the directly quantized coefficient;

a first inverse quantization and frequency domain inverse transformation submodule, configured to perform inverse quantization and frequency domain inverse transformation on the directly quantized coefficient to obtain a first channel parameter reconstructed frame of the current channel state information; and

a first update submodule, configured to update data saved in a buffer with the first channel parameter reconstructed frame.

**15.** The terminal according to claim 13 or 14, wherein the frequency domain quantization and coding module further comprises:

a second inverse quantization and frequency domain inverse transformation submodule, configured to perform inverse quantization and frequency domain inverse transformation on the residual quantized coefficient to obtain a reconstructed residual of the current channel state information;
an adding submodule, configured to obtain a second channel parameter reconstructed frame of the current channel state information after adding the reconstructed residual and the data saved in the buffer;
a second coding submodule, configured to code the residual quantized coefficient; and
a second update submodule, configured to update the data saved in the buffer with the second channel parameter reconstructed frame.

**16.** The terminal according to claim 15, wherein the frequency domain quantization and coding module further comprises:

a first mean square error submodule, configured to obtain a first mean square error value of the second channel parameter reconstructed frame and the current channel parameter frame;
a first judging submodule, configured to judge whether the first mean square error value is greater than a set threshold, wherein if the first mean square error value is greater than the set threshold, after the direct quantization submodule performs the frequency domain transformation and quantization on the current channel parameter frame, the directly quantized coefficient is obtained; after the first inverse quantization and frequency domain inverse transformation submodule obtains the first channel parameter reconstructed frame according to the directly quantized coefficient, a second mean square error value of the first channel parameter reconstructed frame and the current channel parameter frame is obtained; and
a second judging submodule, configured to judge whether the second mean square error value is smaller than the first mean square error value, wherein if the second mean square error value is smaller than the first mean square error value, the first coding submodule codes the directly quantized coefficient, the first update submodule updates the data saved in the buffer with the first channel parameter reconstructed frame; if the second mean square error value is not smaller than the first mean square error value, the second coding submodule codes the residual quantized coefficient, and the second update submodule updates the data saved in the buffer with the second channel parameter reconstructed frame.

**17.** The terminal according to claim15 or 16, wherein the frequency domain quantization and coding module further comprises:

a zero padding submodule, configured to perform zero-padding processing on the current channel parameter frame, so as to obtain a current zero-padded channel parameter frame;
the direct quantization submodule is further configured to obtain a directly quantized coefficient after performing the frequency domain transformation and quantization on the current zero-padded channel parameter frame;
the first inverse quantization and frequency domain inverse transformation submodule is further configured to perform the inverse quantization and frequency domain inverse transformation on the directly quantized coefficient, and use a calculation result of non zero-padding bits as the first channel parameter reconstructed frame of the current channel state information;
the differential quantization submodule is further configured to obtain a residual quantized coefficient after performing the differential operation, frequency transformation and quantization on the current zero-padded channel parameter frame according to the data saved in the buffer; and
the second inverse quantization and frequency domain inverse transformation submodule is further configured to perform the inverse quantization and frequency domain inverse transformation on the residual quantized coefficient, and use a calculation result of non zero-padding bits as a reconstructed residual of the current channel state information.

**18.** The terminal according to one of the claims 13 to 17, wherein the conversion module comprises:

a first conversion submodule, configured to convert all the current channel state information into a current channel parameter frame; and/or
a second conversion submodule, configured to divide the current channel state information into more than one current channel parameter frame according to a set rule;
the sending module is configured to send feedback information of the channel state information which is obtained by performing the coding to the base station, and the feedback information comprises a bit for indicating the quantization and coding method.

19. A base station, comprising:

a receiving module (21), configured to receive current feedback information which is sent by a terminal and corresponds to channel state information;

a decoding and frequency domain inverse quantization module (23), configured to perform decoding and frequency domain inverse quantization on the current feedback information, so as to obtain a current channel parameter reconstructed frame, wherein the current channel parameter reconstructed frame is a matrix of 1 x $N_{RB}$ that contains in each matrix element channel state information of one channel, and wherein the frequency domain quantization comprises frequency domain transformation and quantization;

a first decoding and frequency domain inverse quantization submodule (231), configured to perform decoding, inverse quantization and frequency domain inverse transformation on the current feedback information to obtain the current channel parameter reconstructed frame if the quantization and coding method is a direct quantization and coding method, and update data saved in a buffer with the current channel parameter reconstructed frame;

a second decoding and frequency domain inverse quantization submodule (232), configured to perform decoding, inverse quantization and frequency domain inverse transformation on the current feedback information and a previous feedback information to obtain a reconstructed residual if the quantization and coding method is a differential quantization and coding method, obtain the current channel parameter reconstructed frame and the previous channel parameter reconstructed frame after adding the reconstructed residual and the data saved in the buffer, and update the data saved in the buffer with the current channel parameter reconstructed frame and the previous channel parameter reconstructed frame; and

a mapping module (24), configured to obtain the channel state information of a corresponding time-frequency location by mapping according to the current channel parameter reconstructed frame.

20. The terminal according to claim 19, wherein the decoding and frequency domain inverse quantization module comprises one or more of the following modules:

a third decoding and frequency domain inverse quantization submodule, configured to perform decoding, inverse quantization and frequency domain inverse transformation on the current feedback information if the quantization and coding method is the direct quantization and coding method, use a calculation result of non zero-padding bits as the current channel parameter reconstructed frame, and update the data saved in the buffer with the current channel parameter reconstructed frame; and

a fourth decoding and frequency domain inverse quantization submodule, configured to perform decoding, inverse quantization and frequency domain inverse transformation on the current feedback information if the quantization and coding method is the differential quantization and coding method, use a calculation result of non zero-padding bits as a reconstructed residual, obtain the current channel parameter reconstructed frame after adding the reconstructed residual and the data saved in the buffer, and update the data saved in the buffer with the current channel parameter reconstructed frame.

**Patentansprüche**

1. Verfahren zum Verarbeiten von Kanalzustandsinformationen, das Folgendes umfasst:

Umsetzen (201) von aktuellen Kanalzustandsinformationen in einen aktuellen Kanalparameterrahmen, wobei der aktuelle Kanalparameterrahmen eine $1 \times N_{RB}$-Matrix ist, die in jedem Matrixelement Kanalzustandsinformationen eines Kanals enthält;

Erhalten (202) von Rückmeldungsinformationen nach dem Ausführen von Frequenzbereichsquantisierung und Codierung, wobei die Frequenzbereichsquantisierung Frequenzbereichstransformation und Quantisierung umfasst und wobei die Frequenzbereichsquantisierung und Codierung ein direktes Quantisierungs- und Codierungsverfahren, das auf dem aktuellen Kanalparameterrahmen ausgeführt wird, und ein differentielles Quantisierungs- und

Codierungsverfahren, das auf dem aktuellen Kanalparameterrahmen und einem vorhergehenden Kanalparameterrahmen ausgeführt wird, enthält; und

Senden (203) der Rückmeldungsinformationen zu einer Basisstation.

**2.** Kanalzustandsinformationsverarbeitungsverfahren nach Anspruch 1, wobei das Ausführen der Frequenzbereichsquantisierung und Codierung auf dem aktuellen Kanalparameterrahmen Folgendes umfasst:

Erhalten eines direkt quantisierten Koeffizienten nach dem Ausführen der Frequenzbereichstransformation und Quantisierung auf dem aktuellen Kanalparameterrahmen;
Codieren des direkt quantisierten Koeffizienten und Ausführen von inverser Quantisierung und inverser Frequenzbereichstransformation auf dem direkt quantisierten Koeffizienten, um einen ersten wiederhergestellten Kanalparameterrahmen der aktuellen Kanalzustandsinformationen zu erhalten; und
Aktualisieren von in einem Puffer gesicherten Daten mit dem ersten wiederhergestellten Kanalparameterrahmen.

**3.** Kanalzustandsinformationsverarbeitungsverfahren nach Anspruch 1 oder 2, wobei ein Prozess der Quantisierung Folgendes umfasst: Durchsuchen eines Quantisierungs-Codebuchs nach einem Codewort, das den kürzesten Euklidischen Abstand zu einem durch die Frequenzbereichstransformation erhaltenen Frequenzbereichskoeffizienten aufweist, und Verwenden des Codeworts als ein Quantisierungsergebnis.

**4.** Kanalzustandsinformationsverarbeitungsverfahren nach einem der Ansprüche 1 bis 3, wobei das Ausführen der Frequenzbereichsquantisierung und Codierung auf dem aktuellen Kanalparameterrahmen ferner Folgendes umfasst:

Erhalten eines quantisierten Restkoeffizienten nach dem Ausführen einer Differentialoperation, Frequenztransformation und Quantisierung auf dem aktuellen Kanalparameterrahmen gemäß den in dem Puffer gesicherten Daten;
Ausführen der inversen Quantisierung und inversen Frequenzbereichstransformation auf dem quantisierten Restkoeffizienten, um einen wiederhergestellten Rest der aktuellen Kanalzustandsinformationen zu erhalten;
Erhalten eines zweiten wiederhergestellten Kanalparameterrahmens der aktuellen Kanalzustandsinformationen nach dem Addieren des wiederhergestellten Rests und der in dem Puffer gesicherten Daten; und
Codieren des quantisierten Restkoeffizienten und Aktualisieren der in dem Puffer gesicherten Daten mit dem zweiten wiederhergestellten Kanalparameterrahmen.

**5.** Kanalzustandsinformationsverarbeitungsverfahren nach einem der Ansprüche 1 bis 4, wobei das Ausführen der Frequenzbereichsquantisierung und Codierung auf dem aktuellen Kanalparameterrahmen ferner Folgendes umfasst:

Erhalten eines quantisierten Restkoeffizienten nach dem Ausführen einer Differentialoperation, Frequenztransformation und Quantisierung auf dem aktuellen Kanalparameterrahmen gemäß den in dem Puffer gesicherten Daten;
Ausführen der inversen Quantisierung und inversen Frequenzbereichstransformation auf dem quantisierten Restkoeffizienten, um einen wiederhergestellten Rest der aktuellen Kanalzustandsinformationen zu erhalten;
Erhalten eines zweiten wiederhergestellten Kanalparameterrahmens der aktuellen Kanalzustandsinformationen nach dem Addieren des wiederhergestellten Rests und der in dem Puffer gesicherten Daten; und
Erhalten eines ersten mittleren quadratischen Fehlerwerts des zweiten wiederhergestellten Kanalparameterrahmens und des aktuellen Kanalparameterrahmens;
falls der erste mittlere quadratische Fehlerwert größer ist als ein eingestellter Schwellenwert, Erhalten des direkt quantisierten Koeffizienten nach dem Ausführen der Frequenzbereichstransformation und Quantisierung auf dem aktuellen Kanalparameterrahmen, Erhalten des ersten wiederhergestellten Kanalparameterrahmens gemäß dem direkt quantifizierten Koeffizienten und
Erhalten eines zweiten mittleren quadratischen Fehlerwerts des ersten wiederhergestellten Kanalparameterrahmens und des aktuellen Kanalparameterrahmens; Beurteilen, ob der zweite mittlere quadratische Fehlerwert kleiner ist als der erste mittlere quadratische Fehlerwert, Codieren des direkt quantisierten Koeffizienten und Aktualisieren der in dem Puffer gesicherten Daten mit dem ersten wiederhergestellten Kanalparameterrahmen, falls der zweite mittlere quadratische Fehlerwert kleiner ist als der erste mittlere quadratische Fehlerwert;
Codieren des quantisierten Restkoeffizienten, falls der zweite mittlere quadratische Fehlerwert nicht kleiner ist als der erste mittlere quadratische Fehlerwert, und Aktualisieren der in dem Puffer gesicherten Daten mit dem zweiten wiederhergestellten Kanalparameterrahmen; und
falls der erste mittlere quadratische Fehlerwert kleiner ist als der eingestellte Schwellenwert, Codieren des quantisierten Restkoeffizienten und Aktualisieren der in dem Puffer gesicherten Daten mit dem zweiten wiederhergestellten Kanalparameterrahmen.

**6.** Kanalzustandsinformationsverarbeitungsverfahren nach einem der Ansprüche 1 bis 5, wobei das Ausführen der Frequenzbereichsquantisierung und Codierung auf dem aktuellen Kanalparameterrahmen nach dem Umsetzen der aktuellen Kanalzustandsinformationen in den aktuellen Kanalparameterrahmen Folgendes umfasst:

Ausführen von Verarbeitung zum Auffüllen mit Nullen auf dem aktuellen Kanalparameterrahmen, um einen aktuellen mit Nullen aufgefüllten Kanalparameterrahmen zu erhalten.

**7.** Kanalzustandsinformationsverarbeitungsverfahren nach Anspruch 6, wobei das Ausführen der Frequenzbereichsquantisierung und Codierung auf dem aktuellen Kanalparameterrahmen ferner Folgendes umfasst:

Erhalten eines direkt quantisierten Koeffizienten nach dem Ausführen der Frequenzbereichstransformation und Quantisierung auf dem aktuellen mit Nullen aufgefüllten Kanalparameterrahmen;
Codieren des direkt quantisierten Koeffizienten, Ausführen inverser Quantisierung und inverser Frequenzbereichstransformation auf dem direkt quantisierten Koeffizienten und Übernehmen eines Berechnungsergebnisses aus nicht mit Nullen aufgefüllten Bits als einen ersten wiederhergestellten Kanalparameterrahmen der aktuellen Kanalzustandsinformationen; und
Aktualisieren der in dem Puffer gesicherten Daten mit dem ersten wiederhergestellten Kanalparameterrahmen.

**8.** Kanalzustandsinformationsverarbeitungsverfahren nach Anspruch 6 oder 7, wobei das Ausführen der Frequenzbereichsquantisierung und Codierung auf dem aktuellen Kanalparameterrahmen ferner Folgendes umfasst:

Erhalten eines quantisierten Restkoeffizienten nach dem Ausführen einer Differentialoperation, Frequenztransformation und Quantisierung auf dem aktuellen mit Nullen aufgefüllten Kanalparameterrahmen gemäß den in dem Puffer gesicherten Daten;
Ausführen der inversen Quantisierung und inversen Frequenzbereichstransformation auf dem quantisierten Restkoeffizienten und Verwenden eines Berechnungsergebnisses aus nicht mit Nullen aufgefüllten Bits als einen wiederhergestellten Rest der aktuellen Kanalzustandsinformationen;
Erhalten eines zweiten wiederhergestellten Kanalparameterrahmens der aktuellen Kanalzustandsinformationen nach dem Addieren des wiederhergestellten Rests und der in dem Puffer gesicherten Daten; und
Erhalten eines ersten mittleren quadratischen Fehlerwerts des zweiten wiederhergestellten Kanalparameterrahmens und des aktuellen Kanalparameterrahmens;
falls der erste mittlere quadratische Fehlerwert größer ist als ein eingestellter Schwellenwert, Erhalten eines direkt quantisierten Koeffizienten nach dem Ausführen der Frequenzbereichstransformation und Quantisierung auf dem aktuellen mit Nullen aufgefüllten Kanalparameterrahmen, Ausführen der inversen Quantisierung und inversen Frequenzbereichstransformation auf dem direkt quantisierten Koeffizienten, Verwenden eines Berechnungsergebnisses von nicht mit Nullen aufgefüllten Bits als einen ersten wiederhergestellten Kanalparameterrahmen der aktuellen Kanalzustandsinformationen, Erhalten eines zweiten mittleren quadratischen Fehlerwerts des ersten wiederhergestellten Kanalparameterrahmens und des aktuellen Kanalparameterrahmens; Beurteilen, ob der zweite mittlere quadratische Fehlerwert kleiner ist als der erste mittlere quadratische Fehlerwert, Codieren des direkt quantisierten Koeffizienten, falls der zweite mittlere quadratische Fehlerwert kleiner ist als der erste mittlere quadratische Fehlerwert, und Aktualisieren der in dem Puffer gesicherten Daten mit dem ersten wiederhergestellten Kanalparameterrahmen; Codieren des quantisierten Restkoeffizienten, falls der zweite mittlere quadratische Fehlerwert nicht kleiner ist als der erste mittlere quadratische Fehlerwert, und Aktualisieren der in dem Puffer gesicherten Daten mit dem zweiten wiederhergestellten Kanalparameterrahmen; und
falls der erste mittlere quadratische Fehlerwert kleiner ist als der eingestellte Schwellenwert, Codieren des quantisierten Restkoeffizienten und Aktualisieren der in dem Puffer gesicherten Daten mit dem zweiten wiederhergestellten Kanalparameterrahmen.

**9.** Kanalzustandsinformationsverarbeitungsverfahren nach einem der Ansprüche 1 bis 8, wobei das Senden der Rückmeldungsinformationen zu der Basisstation Folgendes umfasst:

Senden von Rückmeldungsinformationen der Kanalzustandsinformationen, die durch Ausführen der Codierung erhalten werden, zu der Basisstation, wobei die Rückmeldungsinformationen ein Bit zum Anzeigen eines Quantisierungs- und Codierungsverfahrens umfassen.

**10.** Verfahren zum Verarbeiten von Kanalzustandsinformationen, das Folgendes umfasst:

EP 2 475 126 B1

Empfangen (601) von aktuellen Rückmeldungsinformationen, die durch ein Endgerät gesendet werden und Kanalzustandsinformationen entsprechen;

Ausführen (602) von Decodierung und inverser Frequenzbereichsquantisierung auf den aktuellen Rückmeldungsinformationen, um einen aktuellen wiederhergestellten Kanalparameterrahmen zu erhalten, wobei der aktuelle wiederhergestellte Kanalparameterrahmen eine $1 \times N_{RB}$-Matrix ist, die in jedem Matrixelement Kanalzustandsinformationen eines Kanals enthält; und

Erhalten (603) der Kanalzustandsinformationen einer entsprechenden Zeit-Frequenz-Position durch Abbilden gemäß dem aktuellen wiederhergestellten Kanalparameterrahmen;

wobei das Verfahren vor dem Ausführen der Decodierung und der inversen Frequenzbereichsquantisierung auf den aktuellen Rückmeldungsinformationen Folgendes umfasst:

Erhalten eines Quantisierungs- und Codierungsverfahrens, das ein direktes Quantisierungs- und Codierungsverfahren, das auf dem aktuellen Kanalparameterrahmen ausgeführt wird, und ein differentielles Quantisierungs- und Codierungsverfahren, das auf dem aktuellen Kanalparameterrahmen und einem vorhergehenden Kanalparameterrahmen ausgeführt wird, enthält.

11. Kanalzustandsinformationsverarbeitungsverfahren nach Anspruch 10, wobei das Ausführen der Decodierung und der inversen Frequenzbereichsquantisierung auf den aktuellen Rückmeldungsinformationen, um den aktuellen wiederhergestellten Kanalparameterrahmen zu erhalten, Folgendes umfasst:

falls das Quantisierungs- und Codierungsverfahren das direkte Quantisierungs- und Codierungsverfahren ist, Ausführen von Decodierung, inverser Quantisierung und inverser Frequenzbereichstransformation auf den aktuellen Rückmeldungsinformationen, um den aktuellen wiederhergestellten Kanalparameterrahmen zu erhalten, und Aktualisieren der in einem Puffer gesicherten Daten mit dem aktuellen wiederhergestellten Kanalparameterrahmen; oder

falls das Quantisierungs- und Codierungsverfahren das differentielle Quantisierungs- und Codierungsverfahren ist, Ausführen von Decodierung, inverser Quantisierung und inverser Frequenzbereichstransformation auf den aktuellen Rückmeldungsinformationen, um einen wiederhergestellten Rest zu erhalten, Erhalten des aktuellen wiederhergestellten Kanalparameterrahmens nach dem Addieren des wiederhergestellten Rests und der in einem Puffer gesicherten Daten und Aktualisieren der in dem Puffer gesicherten Daten mit dem aktuellen wiederhergestellten Kanalparameterrahmen.

12. Kanalzustandsinformationsverarbeitungsverfahren nach Anspruch 10 oder 11, wobei dann, falls ein quantisierter Koeffizient Daten ist, die einer Verarbeitung zum Auffüllen mit Nullen unterzogen werden, das Ausführen der Decodierung und der inversen Frequenzbereichsquantisierung auf den aktuellen Rückmeldungsinformationen, um den aktuellen wiederhergestellten Kanalparameterrahmen zu erhalten, Folgendes umfasst:

falls das Quantisierungs- und Codierungsverfahren das direkte Quantisierungs- und Codierungsverfahren ist, Ausführen von Decodierung, inverser Quantisierung und inverser Frequenzbereichstransformation auf den aktuellen Rückmeldungsinformationen, Verwenden eines Berechnungsergebnisses von nicht mit Nullen aufgefüllten Bits als den aktuellen wiederhergestellten Kanalparameterrahmen, und Aktualisieren der in einem Puffer gesicherten Daten mit dem aktuellen wiederhergestellten Kanalparameterrahmen; oder

falls das Quantisierungs- und Codierungsverfahren das differentielle Quantisierungs- und Codierungsverfahren ist, Ausführen von Decodierung, inverser Quantisierung und inverser Frequenzbereichstransformation auf den aktuellen Rückmeldungsinformationen, Verwenden eines Berechnungsergebnisses von nicht mit Nullen aufgefüllten Bits als einen wiederhergestellten Rest, Erhalten des aktuellen wiederhergestellten Kanalparameterrahmens nach dem Addieren des wiederhergestellten Rests und der in dem Puffer gesicherten Daten und Aktualisieren der in einem Puffer gesicherten Daten mit dem aktuellen wiederhergestellten Kanalparameterrahmen.

13. Endgerät, das Folgendes umfasst:

ein Umsetzungsmodul, das konfiguriert ist, aktuelle Kanalzustandsinformationen in einen aktuellen Kanalparameterrahmen umzusetzen, wobei der aktuelle Kanalparameterrahmen eine $1 \times N_{RB}$-Matrix ist, die in jedem Matrixelement Kanalzustandsinformationen eines Kanals enthält;

ein Frequenzbereichsquantisierungs- und Codierungsmodul (12), das konfiguriert ist, Frequenzbereichsquantisierung und Codierung auf dem aktuellen Kanalparameterrahmen auszuführen, um Rückmeldungsinformationen zu erhalten, wobei die Frequenzbereichsquantisierung Frequenzbereichstransformation und Quantisierung umfasst;

ein Teilmodul (121) für direkte Quantisierung, das konfiguriert ist, einen direkt quantisierten Koeffizienten nach dem Ausführen der Frequenzbereichstransformation und Quantisierung auf dem aktuellen Kanalparameterrahmen zu erhalten;

ein Teilmodul (125) für differentielle Quantisierung, das konfiguriert ist, einen quantisierten Restkoeffizienten nach dem Ausführen einer differentiellen Verarbeitung, Frequenztransformation und Quantisierung auf dem aktuellen Kanalparameterrahmen und einem vorhergehenden Kanalparameterrahmen gemäß den in dem Puffer gesicherten Daten zu erhalten; und

ein Sendemodul (13), das konfiguriert ist, die Rückmeldungsinformationen zu einer Basisstation zu senden.

14. Endgerät nach Anspruch 13, wobei das Frequenzbereichsquantisierungs- und Codierungsmodul Folgendes umfasst:

ein erstes Codierungsteilmodul, das konfiguriert ist, den direkt quantisierten Koeffizienten zu codieren;

ein erstes Teilmodul für inverse Quantisierung und inverse Frequenzbereichstransformation, das konfiguriert ist, inverse Quantisierung und

inverse Frequenzbereichstransformation auf dem direkt quantisierten Koeffizienten auszuführen, um einen ersten wiederhergestellten Kanalparameterrahmen der aktuellen Kanalzustandsinformationen zu erhalten; und

ein erstes Aktualisierungsteilmodul, das konfiguriert ist, in einem Puffer gesicherte Daten mit dem ersten wiederhergestellten Kanalparameterrahmen zu aktualisieren.

15. Endgerät nach Anspruch 13 oder 14, wobei das Frequenzbereichsquantisierungs- und Codierungsmodul ferner Folgendes umfasst:

ein zweites Teilmodul für inverse Quantisierung und inverse Frequenzbereichstransformation, das konfiguriert ist, inverse Quantisierung und

inverse Frequenzbereichstransformation auf dem quantisierten Restkoeffizienten auszuführen, um einen wiederhergestellten Rest der aktuellen Kanalzustandsinformationen zu erhalten;

ein Addierungsteilmodul, das konfiguriert ist, einen zweiten wiederhergestellten Kanalparameterrahmen der aktuellen Kanalzustandsinformationen nach dem Addieren des wiederhergestellten Rests und der in dem Puffer gesicherten Daten zu erhalten;

ein zweites Codierungsteilmodul, das konfiguriert ist, den quantisierten Restkoeffizienten zu codieren; und

ein zweites Aktualisierungsteilmodul, das konfiguriert ist, die in dem Puffer gesicherten Daten mit dem zweiten wiederhergestellten Kanalparameterrahmen zu aktualisieren.

16. Endgerät nach Anspruch 15, wobei das Frequenzbereichsquantisierungs- und Codierungsmodul ferner Folgendes umfasst:

ein erstes Teilmodul für mittlere quadratische Fehler, das konfiguriert ist, einen ersten mittleren quadratischen Fehlerwert des zweiten wiederhergestellten Kanalparameterrahmens und des aktuellen Kanalparameterrahmens zu erhalten;

ein erstes Beurteilungsteilmodul, das konfiguriert ist zu beurteilen, ob der erste mittlere quadratische Fehlerwert größer ist als ein eingestellter Schwellenwert, wobei, falls der erste mittlere quadratische Fehlerwert größer ist als der eingestellte Schwellenwert, nachdem das Teilmodul für direkte Quantisierung die Frequenzbereichstransformation und Quantisierung auf dem aktuellen Kanalparameterrahmen ausgeführt hat, der direkt quantisierte Koeffizient erhalten wird; nachdem das erste Teilmodul für inverse Quantisierung und inverse Frequenzbereichstransformation den ersten wiederhergestellten Kanalparameterrahmen gemäß dem direkt quantisierten Koeffizienten erhalten hat, ein zweiter mittlerer quadratischer Fehlerwert des ersten wiederhergestellten Kanalparameterrahmens und des aktuellen Kanalparameterrahmens erhalten wird; und

ein zweites Beurteilungsteilmodul, das konfiguriert ist zu beurteilen, ob der zweite mittlere quadratische Fehlerwert kleiner ist als der erste mittlere quadratische Fehlerwert, wobei, falls der zweite mittlere quadratische Fehlerwert kleiner ist als der erste mittlere quadratische Fehlerwert, das erste Codierungsteilmodul den direkt quantisierten Koeffizienten codiert, das erste Aktualisierungsteilmodul die in dem Puffer gesicherten Daten mit dem ersten wiederhergestellten Kanalparameterrahmen aktualisiert; falls der zweite mittlere quadratische Fehlerwert nicht kleiner ist als der erste mittlere quadratische Fehlerwert, das zweite Codierungsteilmodul den quantisierten Restkoeffizienten codiert und das zweite Aktualisierungsteilmodul die in dem Puffer gesicherten Daten mit dem zweiten wiederhergestellten Kanalparameterrahmen aktualisiert.

**17.** Endgerät nach Anspruch 15 oder 16, wobei das Frequenzbereichsquantisierungs- und Codierungsmodul ferner Folgendes umfasst:

ein Teilmodul zum Auffüllen mit Nullen, das konfiguriert ist, das Verarbeiten zum Auffüllen mit Nullen auf dem aktuellen Kanalparameterrahmen auszuführen, um einen mit Nullen aufgefüllten aktuellen Kanalparameterrahmen zu erhalten;

wobei das Teilmodul für direkte Quantisierung ferner konfiguriert ist, einen direkt quantisierten Koeffizienten nach dem Ausführen der Frequenzbereichstransformation und Quantisierung auf dem mit Nullen aufgefüllten aktuellen Kanalparameterrahmen zu erhalten;

wobei das erste Teilmodul zur inversen Quantisierung und inversen Frequenzbereichstransformation ferner konfiguriert ist, die inverse Quantisierung und inverse Frequenzbereichstransformation auf dem direkt quantisierten Koeffizienten auszuführen und ein Berechnungsergebnis aus nicht mit Nullen aufgefüllten Bits als den ersten wiederhergestellten Kanalparameterrahmen der aktuellen Kanalzustandsinformationen zu verwenden;

wobei das Teilmodul für differentielle Quantisierung ferner konfiguriert ist, einen quantisierten Restkoeffizienten nach dem Ausführen der Differentialoperation, Frequenztransformation und Quantisierung auf dem mit Nullen aufgefüllten aktuellen Kanalparameterrahmen gemäß den in dem Puffer gesicherten Daten zu erhalten; und

das zweite Teilmodul zur inversen Quantisierung und inversen Frequenzbereichstransformation ferner konfiguriert ist, die inverse Quantisierung und inverse Frequenzbereichstransformation auf dem quantisierten Restkoeffizienten auszuführen und ein Berechnungsergebnis aus nicht mit Nullen aufgefüllten Bits als einen wiederhergestellten Rest der aktuellen Kanalzustandsinformationen zu verwenden.

**18.** Endgerät nach einem der Ansprüche 13 bis 17, wobei
das Umsetzungsmodul Folgendes umfasst:

ein erstes Umsetzungsteilmiodul, das konfiguriert ist, die vollständigen aktuellen Kanalzustandsinformationen in einen aktuellen Kanalparameterrahmen umzusetzen; und/oder

ein zweites Umsetzungsteilmodul, das konfiguriert ist, die aktuellen Kanalzustandsinformationen gemäß einer eingestellten Regel in mehr als einen aktuellen Kanalparameterrahmen aufzuteilen;

wobei das Sendemodul konfiguriert ist, Rückmeldungsinformationen der Kanalzustandsinformationen, die durch Ausführen der Codierung erhalten werden, zu der Basisstation zu senden, und die Rückmeldungsinformationen ein Bit zum Anzeigen des Quantisierungs- und Codierungsverfahrens umfassen.

**19.** Basisstation, die Folgendes umfasst:

ein Empfangsmodul (21), das konfiguriert ist, aktuelle Rückmeldungsinformationen, die durch ein Endgerät gesendet werden und Kanalzustandsinformationen entsprechen, zu empfangen;

ein Modul (23) für Decodierung und inverse Frequenzbereichsquantisierung, das konfiguriert ist, Decodierung und inverse Frequenzbereichsquantisierung auf den aktuellen Rückmeldungsinformationen auszuführen, um einen aktuellen wiederhergestellten Kanalparameterrahmen zu erhalten, wobei der aktuelle wiederhergestellte Kanalparameterrahmen eine $1 \times N_{RB}$-Matrix ist, die in jedem Matrixelement Kanalzustandsinformationen eines Kanals enthält, und wobei die Frequenzbereichsquantisierung Frequenzbereichstransformation und Quantisierung umfasst;

ein erstes Teilmodul (231) für Decodierung und inverse Frequenzbereichsquantisierung, das konfiguriert ist, Decodierung, inverse Quantisierung und inverse Frequenzbereichstransformation auf den aktuellen Rückmeldungsinformationen auszuführen, um den aktuellen wiederhergestellten Kanalparameterrahmen zu erhalten, falls das Quantisierungs- und Codierungsverfahren ein direktes Quantisierungs- und Codierungsverfahren ist, und die in einem Puffer gesicherten Daten mit dem aktuellen wiederhergestellten Kanalparameterrahmen zu aktualisieren;

ein zweites Teilmodul (232) für Decodierung und inverse Frequenzbereichsquantisierung, das konfiguriert ist, Decodierung, inverse Quantisierung und inverse Frequenzbereichstransformation auf den aktuellen Rückmeldungsinformationen und vorhergehenden Rückmeldungsinformationen auszuführen, um einen wiederhergestellten Rest zu erhalten, falls das Quantisierungs- und Codierungsverfahren ein differentielles Quantisierungs- und Codierungsverfahren ist, den aktuellen wiederhergestellten Kanalparameterrahmen und den vorhergehenden wiederhergestellten Kanalparameterrahmen nach dem Addieren des wiederhergestellten Rests und der in dem Puffer gesicherten Daten zu erhalten und die in dem Puffer gesicherten Daten mit dem aktuellen wiederhergestellten Kanalparameterrahmen und dem vorhergehenden wiederhergestellten Kanalparameterrahmen zu aktualisieren; und

ein Abbildungsmodul (24), das konfiguriert ist, die Kanalzustandsinformationen einer entsprechenden Zeit-Frequenz-Position durch Abbilden gemäß dem aktuellen wiederhergestellten Kanalparameterrahmen zu erhalten.

20. Endgerät nach Anspruch 19, wobei das Modul für Decodierung und inverse Frequenzbereichsquantisierung eines oder mehrere der folgenden Module umfasst:

ein drittes Teilmodul für Decodierung und inverse Frequenzbereichsquantisierung, das konfiguriert ist, Decodierung, inverse Quantisierung und inverse Frequenzbereichstransformation auf den aktuellen Rückmeldungsinformationen auszuführen, falls das Quantisierungs- und Codierungsverfahren das direkte Quantisierungs- und Codierungsverfahren ist, ein Berechnungsergebnis aus nicht mit Nullen aufgefüllten Bits als den aktuellen wiederhergestellten Kanalparameterrahmen zu verwenden und die in dem Puffer gesicherten Daten mit dem aktuellen wiederhergestellten Kanalparameterrahmen zu aktualisieren; und

ein viertes Teilmodul für Decodierung und inverse Frequenzbereichsquantisierung, das konfiguriert ist, Decodierung, inverse Quantisierung und inverse Frequenzbereichstransformation auf den aktuellen Rückmeldungsinformationen auszuführen, falls das Quantisierungs- und Codierungsverfahren das differentielle Quantisierungs- und Codierungsverfahren ist, ein Berechnungsergebnis aus nicht mit Nullen aufgefüllten Bits als einen wiederhergestellten Rest zu verwenden, den aktuellen wiederhergestellten Kanalparameterrahmen nach dem Addieren des wiederhergestellten Rests und der in dem Puffer gesicherten Daten zu erhalten und die in dem Puffer gesicherten Daten mit dem aktuellen wiederhergestellten Kanalparameterrahmen zu aktualisieren.

**Revendications**

1. Procédé pour traiter une information d'état de canal, comprenant les étapes suivantes :

convertir (201) une information d'état de canal courante en une trame de paramètres de canal courante, où la trame de paramètres de canal courante est une matrice 1 x $N_{RB}$ qui contient dans chaque élément de matrice une information d'état de canal d'un canal ;

obtenir (202) une information de rétroaction après avoir effectué une quantification de domaine de fréquences et un codage, où la quantification de domaine de fréquences comprend une transformation du domaine de fréquences et une quantification, et où la quantification de domaine de fréquences et le codage comprennent un procédé de quantification et de codage direct effectué sur la trame de paramètres de canal courante et un procédé de quantification et de codage différentiel effectué sur la trame de paramètres de canal courante et sur une trame de paramètres de canal précédente ; et

envoyer (203) l'information de rétroaction à une station de base.

2. Procédé de traitement d'information d'état de canal selon la revendication 1, dans lequel procéder à la quantification de domaine de fréquences et au codage sur la trame de paramètres de canal courante comprend les étapes suivantes :

obtenir un coefficient directement quantifié après avoir effectué la transformation de domaine de fréquences et une quantification sur la trame de paramètres de canal courante ;

coder le coefficient directement quantifié, et procéder à une quantification inverse et à une transformation inverse du domaine de fréquences sur le coefficient directement quantifié, de manière à obtenir une première trame reconstruite de paramètres de canal de l'information d'état de canal courante ; et

mettre à jour des données sauvegardées dans une mémoire tampon avec la première trame reconstruite de paramètres de canal.

3. Procédé de traitement d'information d'état de canal selon la revendication 1 ou la revendication 2, un processus de quantification comprenant les étapes suivantes :

rechercher, dans un livre de codes de quantification, un mot de code qui a la distance euclidienne la plus courte à un coefficient de domaine de fréquences obtenu par l'intermédiaire de la transformation de domaine de fréquences, et utiliser le mot de code comme résultat de quantification.

4. Procédé de traitement d'information d'état de canal selon l'une quelconque des revendications 1 à 3, dans lequel procéder à la quantification de domaine de fréquences et au codage sur la trame de paramètres de canal courante comprend en outre les étapes suivantes :

obtenir un coefficient quantifié résiduel après avoir procédé à une opération différentielle, à une transformation de fréquence et à une quantification sur la trame de paramètres de canal courante conformément aux données sauvegardées dans la mémoire tampon ;

procéder à la quantification inverse et à la transformation inverse de domaine de fréquences sur le coefficient quantifié résiduel de manière à obtenir un résidu reconstruit de l'information d'état de canal courante ;

obtenir une seconde trame reconstruite de paramètres de canal de l'information d'état de canal courante après avoir ajouté le résidu reconstruit et les données sauvegardées dans la mémoire tampon ; et

coder le coefficient quantifié résiduel et mettre à jour les données sauvegardées dans la mémoire tampon avec la seconde trame reconstruite de paramètres de canal.

5. Procédé de traitement d'information d'état de canal selon l'une quelconque des revendications 1 à 4, dans lequel procéder à la quantification de domaine de fréquences et au codage sur la trame de paramètres de canal courante comprend en outre les étapes suivantes :

obtenir un coefficient quantifié résiduel après avoir procédé à une opération différentielle, à une transformation de fréquence et à une quantification sur la trame de paramètres de canal courante conformément aux données sauvegardées dans la mémoire tampon ;

procéder à la quantification inverse et à la transformation inverse de domaine de fréquences sur le coefficient quantifié résiduel de manière à obtenir un résidu reconstruit de l'information d'état de canal courante ;

obtenir une seconde trame reconstruite de paramètres de canal de l'information d'état de canal courante après avoir ajouté le résidu reconstruit et les données sauvegardées dans la mémoire tampon ; et

obtenir une première valeur d'erreur quadratique moyenne de la seconde trame reconstruite de paramètres de canal et de la trame de paramètres de canal courante ;

si la première valeur d'erreur quadratique moyenne est supérieure à un seuil défini, obtenir le coefficient directement quantifié après avoir procédé à la transformation de domaine de fréquences et à la quantification sur la trame de paramètres de canal courante, obtenir la première trame reconstruite de paramètres de canal conformément au coefficient directement quantifié, et obtenir une seconde valeur d'erreur quadratique moyenne de la première trame reconstruite de paramètres de canal et de la trame de paramètres de canal courante ;

juger si la seconde valeur d'erreur quadratique moyenne est inférieure à la première valeur d'erreur quadratique moyenne, coder le coefficient directement quantifié, et mettre à jour les données sauvegardées dans la mémoire tampon avec la première trame reconstruite de paramètres de canal si la seconde valeur d'erreur quadratique moyenne est inférieure à la première valeur d'erreur quadratique moyenne ; coder le coefficient quantifié résiduel si la seconde valeur d'erreur quadratique moyenne n'est pas inférieure à la première valeur d'erreur quadratique moyenne, et mettre à jour les données sauvegardées dans la mémoire tampon avec la seconde trame reconstruite de paramètres de canal ; et

si la première valeur d'erreur quadratique moyenne est inférieure au seuil défini, coder le coefficient quantifié résiduel, et mettre à jour les données sauvegardées dans la mémoire tampon avec la seconde trame reconstruite de paramètres de canal.

6. Procédé de traitement d'information d'état de canal selon une des revendications 1 à 5, dans lequel, après la conversion de l'information d'état de canal courante en la trame de paramètres de canal courante, procéder à la quantification de domaine de fréquences et au codage sur la trame de paramètres de canal courante comprend l'étape suivante :

procéder à un traitement de rajout de zéros sur la trame de paramètres de canal courante, de manière à obtenir une trame de paramètres de canal avec zéros rajoutés courante.

7. Procédé de traitement d'information d'état de canal selon la revendication 6, dans lequel procéder à la quantification de domaine de fréquences et au codage sur la trame de paramètres de canal courante comprend les étapes suivantes :

obtenir un coefficient directement quantifié après avoir procédé à la transformation de domaine de fréquences et à une quantification sur la trame de paramètres de canal avec zéros rajoutés courante ;

coder le coefficient directement quantifié, procéder à une quantification inverse et à une transformation inverse de domaine de fréquences sur le coefficient directement quantifié, et prendre un résultat de calcul de bits qui ne sont pas des bits de rajout de zéros comme première trame reconstruite de paramètres de canal de l'information d'état de canal courante ; et

mettre à jour les données sauvegardées dans la mémoire tampon avec la première trame reconstruite de paramètres de canal.

8. Procédé de traitement d'information d'état de canal selon la revendication 6 ou la revendication 7, dans lequel procéder à la quantification de domaine de fréquences et au codage sur la trame de paramètres de canal courante comprend en outre les étapes suivantes :

obtenir un coefficient quantifié résiduel après avoir procédé à une opération différentielle, à une transformation de fréquence et à une quantification sur la trame de paramètres de canal avec zéros rajoutés courante conformément aux données sauvegardées dans la mémoire tampon ;

procéder à la quantification inverse et à la transformation inverse de domaine de fréquences sur le coefficient quantifié résiduel, et utiliser un résultat de calcul de bits qui ne sont pas des bits de rajout de zéros comme un résidu reconstruit de l'information d'état de canal courante ; et

obtenir une seconde trame reconstruite de paramètres de canal de l'information d'état de canal courante après avoir ajouté le résidu reconstruit et les données sauvegardées dans la mémoire tampon ; et

obtenir une première valeur d'erreur quadratique moyenne de la seconde trame reconstruite de paramètres de canal et de la trame de paramètres de canal courante ;

si la première valeur de l'erreur quadratique moyenne est supérieure à un seuil défini, obtenir un coefficient directement quantifié après avoir procédé à la transformation de domaine de fréquences et à la quantification sur la trame de paramètres de canal à zéros rajoutés courante, procéder à la quantification inverse et à la transformation inverse de domaine de fréquences sur le coefficient directement quantifié, utiliser un résultat de calcul de bits qui ne sont pas des bits de rajout de zéros comme une première trame reconstruite de paramètres de canal de l'information d'état de canal courante, obtenir une seconde valeur d'erreur quadratique moyenne de la première trame reconstruite de paramètres de canal et de la trame de paramètres de canal courante ;

juger si la seconde valeur d'erreur quadratique moyenne est inférieure à la première valeur d'erreur quadratique moyenne, coder le coefficient directement quantifié si la seconde valeur d'erreur quadratique moyenne est inférieure à la première valeur d'erreur quadratique moyenne, et mettre à jour les données sauvegardées dans la mémoire tampon avec la première trame reconstruite de paramètres de canal ; coder le coefficient quantifié résiduel si la seconde valeur d'erreur quadratique moyenne n'est pas inférieure à la première valeur d'erreur quadratique moyenne, et mettre à jour les données sauvegardées dans la mémoire tampon avec la seconde trame reconstruite de paramètres de canal ; et

si la première valeur d'erreur quadratique moyenne est inférieure au seuil défini, coder le coefficient quantifié résiduel, et mettre à jour les données sauvegardées dans la mémoire tampon avec la seconde trame reconstruite de paramètres de canal.

9. Procédé de traitement d'information d'état de canal selon l'une quelconque des revendications 1 à 8, dans lequel envoyer l'information de rétroaction à la station de base comprend l'étape suivante :

envoyer l'information de rétroaction de l'information d'état de canal qui est obtenue en procédant au codage à la station de base, où l'information de rétroaction comprend un bit pour indiquer un procédé de quantification et de codage.

10. Procédé pour traiter une information d'état de canal, comprenant les étapes suivantes :

recevoir (601) une information de rétroaction courante qui est envoyée par un terminal et qui correspond à une information d'état de canal ;

procéder (602) à un décodage et à une quantification inverse de domaine de fréquences sur l'information de rétroaction courante pour obtenir une trame reconstruite de paramètres de canal courante, où la trame reconstruite de paramètres de canal courante est une matrice $1 \times N_{RB}$ qui contient dans chaque élément de matrice une information d'état de canal d'un canal ; et

obtenir (603) l'information d'état de canal d'un emplacement temps-fréquence correspondant en procédant à un mappage conformément à la trame reconstruite de paramètres de canal courante ;

où, avant de procéder au décodage et à une quantification inverse de domaine de fréquences sur l'information de rétroaction courante, le procédé comprend les étapes suivantes :

obtenir un procédé de quantification et de codage comprenant un procédé de quantification directe et de codage exécuté sur la trame de paramètres de canal courante et un procédé de quantification différentielle et de codage exécuté sur la trame de paramètres de canal courante et une trame de paramètres de canal précédente.

**11.** Procédé de traitement d'information d'état de canal selon la revendication 10, dans lequel procéder au décodage et à une quantification inverse de domaine de fréquences sur l'information de rétroaction courante pour obtenir la trame reconstruite de paramètres de canal courante comprend les étapes suivantes :

si le procédé de quantification et de codage est le procédé de quantification et de codage direct, procéder à un décodage, à une quantification inverse et à une transformation inverse de domaine de fréquences sur l'information de rétroaction courante pour obtenir la trame reconstruite de paramètres de canal courante, et mettre à jour des données sauvegardées dans une mémoire tampon avec la trame reconstruite de paramètres de canal courante ; ou
si le procédé de quantification et de codage est le procédé de quantification et de codage différentiel, procéder à un décodage, à une quantification inverse et à une transformation inverse de domaine de fréquences sur l'information de rétroaction courante pour obtenir un résidu reconstitué, obtenir la trame reconstruite de paramètres de canal courante après ajout du résidu reconstruit et des données sauvegardées dans une mémoire tampon, et mettre à jour les données sauvegardées dans la mémoire tampon avec la trame reconstruite de paramètres de canal courante.

**12.** Procédé de traitement d'information d'état de canal selon la revendication 10 ou la revendication 11, dans lequel si un coefficient quantifié est des données qui subissent un traitement de rajout de zéros, procéder au décodage et à la quantification inverse de domaine de fréquences sur l'information de rétroaction courante pour obtenir la trame reconstruite de paramètres de canal courante comprend les étapes suivantes :

si le procédé de quantification et de codage est le procédé de quantification et de codage direct, procéder à un décodage, à une quantification inverse et à une transformation inverse de domaine de fréquences sur l'information de rétroaction courante, utiliser un résultat de calcul de bits qui ne sont pas des bits de rajout de zéros comme la trame reconstruite de paramètres de canal courante, et mettre à jour des données sauvegardées dans une mémoire tampon avec la trame reconstruite de paramètres de canal courante ; ou
si le procédé de quantification et de codage est le procédé de quantification et de codage différentiel, procéder à un décodage, à une quantification inverse et à une transformation inverse de domaine de fréquences sur l'information de rétroaction courante, utiliser un résultat de calcul de bits qui ne sont pas des bits de rajout de zéros comme résidu reconstruit, obtenir la trame reconstruite de paramètres de canal courante après ajout du résidu reconstruit et des données sauvegardées dans la mémoire tampon, et mettre à jour des données sauvegardées dans une mémoire tampon avec la trame reconstruite de paramètres de canal courante.

**13.** Terminal comprenant:

un module de conversion, configuré pour convertir une information d'état de canal courante en une trame de paramètres de canal courante, où la trame de paramètres de canal courante est une matrice $1 \times N_{RB}$ qui contient dans chaque élément de matrice une information d'état de canal d'un canal ;
un module de quantification de domaine de fréquences et de codage (12), configuré pour procéder à une quantification de domaine de fréquences et à un codage sur la trame de paramètres de canal courante pour obtenir une information de rétroaction,
où la quantification de domaine de fréquences comprend une transformation de domaine de fréquences et une quantification ;
un sous-module de quantification directe (121), configuré pour obtenir un coefficient directement quantifié après avoir procédé à la transformation de domaine de fréquences et à la quantification sur la trame de paramètres de canal courante ;
un sous-module de quantification différentielle (125), configuré pour obtenir un coefficient quantifié résiduel après avoir procédé à une opération différentielle, une transformation de fréquence et une quantification sur la trame de paramètres de canal courante et une trame de paramètres de canal précédente conformément aux données sauvegardées dans la mémoire tampon ; et
un module d'envoi (13), configuré pour envoyer l'information de rétroaction à une station de base.

**14.** Terminal selon la revendication 13, dans lequel le module de quantification de domaine de fréquences et de codage comprend :

un premier sous-module de codage, configuré pour coder le coefficient directement quantifié ;
un premier sous-module de quantification inverse et de transformation inverse de domaine de fréquences, configuré pour procéder à une quantification inverse et une transformation inverse de domaine de fréquences sur le coefficient directement quantifié pour obtenir une première trame reconstruite de paramètres de canal de l'information d'état de canal courante ; et
un premier sous-module de mise à jour, configuré pour mettre à jour des données sauvegardées dans une mémoire tampon avec la première trame reconstruite de paramètres de canal.

15. Terminal selon la revendication 13 ou la revendication 14, dans lequel le module de quantification de domaine de fréquences et de codage comprend en outre :

un second sous-module de quantification inverse et de transformation inverse de domaine de fréquences, configuré pour procéder à une quantification inverse et une transformation inverse de domaine de fréquences sur le coefficient quantifié résiduel pour obtenir un résidu reconstruit de l'information d'état de canal courante ;
un sous-module d'ajout, configuré pour obtenir une seconde trame reconstruite de paramètres de canal de l'information d'état de canal courante après ajout du résidu reconstruit et des données sauvegardées dans la mémoire tampon ;
un second sous-module de codage, configuré pour coder le coefficient quantifié résiduel ; et
un second sous-module de mise à jour, configuré pour mettre à jour les données sauvegardées dans la mémoire tampon avec la seconde trame reconstruite de paramètres de canal.

16. Terminal selon la revendication 15, dans lequel le module de quantification de domaine de fréquences et de codage comprend en outre :

un premier sous-module d'erreur quadratique moyenne, configuré pour obtenir une première valeur d'erreur quadratique moyenne de la seconde trame reconstruite de paramètres de canal et de la trame de paramètres de canal courante ;
un premier sous-module de jugement, configuré pour juger si la première valeur d'erreur quadratique moyenne est supérieure à un seuil défini, où si la première valeur d'erreur quadratique moyenne est supérieure au seuil défini, après que le sous-module de quantification directe a procédé à la transformation de domaine de fréquences et à la quantification sur la trame de paramètres de canal courante, le coefficient directement quantifié est obtenu ; après que le premier sous-module de quantification inverse et de transformation inverse de domaine de fréquences a obtenu la première trame reconstruite de paramètres de canal conformément au coefficient directement quantifié, une seconde valeur d'erreur quadratique moyenne de la première trame reconstruite de paramètres de canal et de la trame de paramètres de canal courante est obtenue; et
un second sous-module de jugement, configuré pour juger si la seconde valeur d'erreur quadratique moyenne est inférieure à la première valeur d'erreur quadratique moyenne, où si la seconde valeur d'erreur quadratique moyenne est inférieure à la première valeur d'erreur quadratique moyenne, le premier sous-module de codage code le coefficient directement quantifié, le premier sous-module de mise à jour met à jour les données sauvegardées dans la mémoire tampon avec la première trame reconstruite de paramètres de canal ; si la seconde valeur d'erreur quadratique moyenne n'est pas inférieure à la première valeur d'erreur quadratique moyenne, le second sous-module de codage code le coefficient quantifié résiduel, et le second sous-module de mise à jour met à jour les données sauvegardées dans la mémoire tampon avec la seconde trame reconstruite de paramètres de canal.

17. Terminal selon la revendication 15 ou la revendication 16, dans lequel le module de quantification de domaine de fréquences et de codage comprend en outre :

un sous-module de rajout de zéros, configuré pour procéder à un traitement de rajout de zéros sur la trame de paramètres de canal courante, de manière à obtenir une trame de paramètres de canal avec zéros rajoutés courante ;
le sous-module de quantification directe est en outre configuré pour obtenir un coefficient directement quantifié après avoir procédé à la transformation de domaine de fréquences et à une quantification sur la trame de paramètres de canal avec zéros rajoutés courante ;
le premier sous-module de quantification inverse et de transformation inverse de domaine de fréquences est en outre configuré pour procéder à la quantification inverse et à une transformation inverse de domaine de fréquences sur le coefficient directement quantifié, et pour utiliser un résultat de calcul de bits qui ne sont pas des bits de rajout de zéros comme première trame reconstruite de paramètres de canal de l'information d'état de canal courante ;

le sous-module de quantification différentielle est en outre configuré pour obtenir un coefficient quantifié résiduel après avoir procédé à l'opération différentielle, à la transformation de fréquence et à la quantification sur la trame de paramètres de canal à zéros rajoutés courante conformément aux données sauvegardées dans la mémoire tampon ; et

le second sous-module de quantification inverse et de transformation inverse de domaine de fréquences est en outre configuré pour procéder à la quantification inverse et à la transformation inverse de domaine de fréquences sur le coefficient quantifié résiduel, et pour utiliser un résultat de calcul de bits qui ne sont pas des bits de rajout de zéros comme un résidu reconstruit de l'information d'état de canal courante.

**18.** Terminal selon l'une quelconque des revendications 13 à 17, dans lequel :

le module de conversion comprend :

un premier sous-module de conversion, configuré pour convertir l'ensemble de l'information d'état de canal courante en une trame de paramètres de canal courante ; et/ou

un second sous-module de conversion, configuré pour diviser l'information d'état de canal courante en plus d'une trame de paramètres de canal courante conformément à une règle définie ;

le module d'envoi est configuré pour envoyer une information de rétroaction de l'information d'état de canal qui est obtenue en procédant au codage à la station de base, et l'information de rétroaction comprend un bit pour indiquer le procédé de quantification et de codage.

**19.** Station de base, comprenant :

un module de réception (21), configuré pour recevoir une information de rétroaction courante qui est envoyée par un terminal et qui correspond à une information d'état de canal ;

un module de décodage et de quantification inverse de domaine de fréquences (23), configuré pour procéder à un décodage et une quantification inverse de domaine de fréquences sur l'information de rétroaction courante, de manière à obtenir une trame reconstruite de paramètres de canal courante, où la trame reconstruite de paramètres de canal courante est une matrice 1 x NRB qui contient dans chaque élément de matrice une information d'état de canal d'un canal, et où la quantification de domaine de fréquences comprend une transformation du domaine de fréquences et une quantification ;

un premier sous-module de décodage et de quantification inverse de domaine de fréquences (231), configuré pour procéder à un décodage, à une quantification inverse et à une transformation inverse de domaine de fréquences sur l'information de rétroaction courante pour obtenir la trame reconstruite de paramètres de canal courante si le procédé de quantification et de codage est un procédé de quantification et de codage direct, et mettre à jour les données sauvegardées dans une mémoire tampon avec la trame reconstruite de paramètres de canal courante ;

un second sous-module de décodage et de quantification inverse de domaine de fréquences (232), configuré pour procéder à un décodage, à une quantification inverse et à une transformation inverse de domaine de fréquences sur l'information de rétroaction courante et une information de rétroaction précédente pour obtenir un résidu reconstruit si le procédé de quantification et de codage est un procédé de quantification et de codage différentiel, obtenir la trame reconstruite de paramètres de canal courante et la trame reconstruite de paramètres de canal précédente après ajout du résidu reconstruit et des données sauvegardées dans la mémoire tampon, et mettre à jour les données sauvegardées dans la mémoire tampon avec la trame reconstruite de paramètres de canal courante et la trame reconstruite de paramètres de canal précédente ; et

un module de mappage (24), configuré pour obtenir l'information d'état de canal d'un emplacement temps-fréquence correspondant en procédant à un mappage conformément à la trame reconstruite de paramètres de canal courante.

**20.** Terminal selon la revendication 19, dans lequel le module de décodage et de quantification inverse de domaine de fréquences comprend un ou plusieurs des modules suivants :

un troisième sous-module de décodage et de quantification inverse de domaine de fréquences, configuré pour procéder à un décodage, à une quantification inverse et à une transformation inverse de domaine de fréquences sur l'information de rétroaction courante si le procédé de quantification et de codage est le procédé de quantification et de codage direct, utiliser un résultat de calcul de bits qui ne sont pas des bits de rajout de zéros comme la trame reconstruite de paramètres de canal courante, et mettre à jour des données sauvegardées

EP 2 475 126 B1

dans la mémoire tampon avec la trame reconstruite de paramètres de canal courante ; et
un quatrième sous-module de décodage et de quantification inverse de domaine de fréquences, configuré pour procéder à un décodage, à une quantification inverse et à une transformation inverse de domaine de fréquences sur l'information de rétroaction courante si le procédé de quantification et de codage est le procédé de quantification et de codage différentiel, utiliser un résultat de calcul de bits qui ne sont pas des bits de rajout de zéros comme un résidu reconstruit, obtenir la trame reconstruite de paramètres de canal courante après ajout du résidu reconstruit et des données sauvegardées dans la mémoire tampon, et mettre à jour les données sauvegardées dans la mémoire tampon avec la trame reconstruite de paramètres de canal courante.

FIG. 1

| Convert current channel state information into a current channel parameter frame | 201 |

| Obtain feedback information after performing frequency domain quantization and coding on the current channel parameter frame | 202 |

| Send the feedback information to a base station | 203 |

FIG. 2

Convert current channel state information into a current channel parameter frame — 201

- - - - - - - - - - - - - - - - - - - - - - - - — 202

Obtain a directly quantized coefficient after performing the frequency domain transformation and quantization on the current channel parameter frame — 301

Code the directly quantized coefficient, and perform inverse quantization and frequency domain inverse transformation on the directly quantized coefficient, so as to obtain a first channel parameter reconstructed frame of the current channel state information — 302

Update data saved in a buffer with the first channel parameter reconstructed frame, thereby ending the frequency domain quantization process — 303

Obtain a residual quantized coefficient after performing a differential operation, frequency transformation and quantization on the current channel parameter frame according to the data saved in the buffer — 311

Perform the inverse quantization and the frequency domain inverse transformation on the residual quantized coefficient, so as to obtain a reconstructed residual of the current channel state information — 312

Obtain a second channel parameter reconstructed frame of the current channel state information after adding the reconstructed residual and the data saved in the buffer — 313

Code the residual quantized coefficient, and update the data saved in the buffer with the second channel parameter reconstructed frame, thereby ending the frequency domain quantization process — 314

FIG 3

Obtain a residual quantized coefficient after performing a differential operation, frequency transformation and quantization on the current channel parameter frame according to the data saved in the buffer ⟶ 401

Perform the inverse quantization and the frequency domain inverse transformation on the residual quantized coefficient, so as to obtain a reconstructed residual of the current channel state information ⟶ 402

Obtain a second channel parameter reconstructed frame of the current channel state information after adding the reconstructed residual and the data saved in the buffer ⟶ 403

Obtain a first mean square error value of the second channel parameter reconstructed frame and the current channel parameter frame ⟶ 404

No ◁ Whether the first mean square error value is greater than a set threshold ⟶ 405

Yes

Obtain a directly quantized coefficient after performing the frequency domain transformation and quantization on the current channel parameter frame, obtain a first channel parameter reconstructed frame according to the directly quantized coefficient, and obtain a second mean square error value of the first channel parameter reconstructed frame and the current channel parameter frame ⟶ 406

No ◁ Whether the second mean square error value is smaller than the first mean square error value ⟶ 407

Yes

Code the directly quantized coefficient, and update the data saved in the buffer with the first channel parameter reconstructed frame, thereby ending the frequency domain quantization process ⟶ 408

Code the residual quantized coefficient, and update the data saved in the buffer with the second channel parameter reconstructed frame, thereby ending the frequency domain quantization process ⟶ 409

FIG 4

Convert current channel state information into a current channel parameter frame  ⟋∼ 201

⟋∼ 202

Obtain a residual quantized coefficient after performing a differential operation, frequency transformation and quantization on the current zero-padded channel parameter frame according to the data saved in the buffer  ⟋∼ 501

Code the directly quantized coefficient, perform inverse quantization and frequency domain inverse transformation on the directly quantized coefficient, and use a calculation result corresponding to non zero-padding bits as a first channel parameter reconstructed frame of the current channel state information  ⟋∼ 502

Update the data saved in the buffer with the first channel parameter reconstructed frame, thereby ending the frequency domain quantization process  ⟋∼ 503

Obtain a residual quantized coefficient after performing a prediction operation, frequency transformation and quantization on the current channel parameter frame according to the data saved in the buffer  ⟋∼ 511

Perform the inverse quantization and the frequency domain inverse transformation on the residual quantized coefficient, and use a calculation result of non zero-padding bits as a reconstructed residual of the current channel state information  ⟋∼ 512

Obtain a second channel parameter reconstructed frame of the current channel state information after adding the reconstructed residual and the data saved in the buffer  ⟋∼ 513

TO FIG. 5B              TO FIG. 5B              TO FIG. 5B

FIG. 5A

CONT. FROM
FIG. 5A

CONT. FROM
FIG. 5A

CONT. FROM
FIG. 5A

Obtain a first mean square error value of the second channel parameter reconstructed frame and the current channel parameter frame    514

Whether the first mean square error value is greater than a set threshold    515

No

Yes

Obtain a directly quantized coefficient after performing the frequency domain transformation and quantization on the current zero-padded channel parameter frame, perform the inverse quantization and frequency domain inverse transformation on the directly quantized coefficient, use a calculation result corresponding to non zero-padding bits as a first channel parameter reconstructed frame of the current channel state information, and obtain a second mean square error value of the first channel parameter reconstructed frame and the current channel parameter frame    516

Whether the second mean square error value is smaller than the first mean square error value    517

No

Yes

Code the directly quantized coefficient, and update the data saved in the buffer with the first channel parameter reconstructed frame, thereby ending the frequency domain quantization process    518

Code the residual quantized coefficient, and update the data saved in the buffer with the second channel parameter reconstructed frame, thereby ending the frequency domain quantization process    519

FIG. 5B

Receive current feedback information, which is sent by a terminal, of channel state information —— 601

Perform decoding and frequency domain inverse quantization on the current feedback information, so as to obtain a current channel parameter reconstructed frame —— 602

Obtain channel state information of a corresponding time-frequency location by mapping according to the current channel parameter reconstructed frame —— 603

FIG 6

A UE converts current channel state information into a current channel parameter frame —— 701

The UE performs frequency domain quantization on the current channel parameter frame —— 702

The UE codes a quantized coefficient, obtains feedback information, and updates data in a buffer —— 703

The UE sends coded feedback information to the base station —— 704

The base station receives the feedback information sent by the UE, and decodes the feedback information —— 705

The base station performs inverse quantization and frequency domain inverse transformation on a decoded quantized coefficient —— 706

The base station maps the channel parameter reconstructed frame to a corresponding time-frequency location, so as to obtain reconstructed channel parameters on the corresponding time-frequency location —— 707

FIG 7a

FIG. 7b

FIG. 7c

EP 2 475 126 B1

FIG. 7d

A UE converts current channel state information into a current channel parameter frame — 801

The UE performs frequency domain quantization on the current channel parameter frame — 802

The UE performs decision on the quantization and coding method, codes a quantized coefficient, obtains feedback information, and updates data in a buffer — 803

The UE sends coded feedback information to the base station — 804

The base station receives the feedback information sent by the UE, and decodes the feedback information — 805

The base station performs inverse quantization and frequency domain inverse transformation on a decoded quantized coefficient — 806

The base station maps the channel parameter reconstructed frame to a corresponding time-frequency location, so as to obtain reconstructed channel parameters on the corresponding time-frequency location — 807

FIG 8

```
┌─────────────────────────────────────────────┐
│ A UE converts current channel state          │╮── 901
│ information into a current channel            │
│ parameter frame                               │
└─────────────────────────────────────────────┘
                      │
                      ▼
┌─────────────────────────────────────────────┐
│ Zero-padding processing is performed on the  │╮── 902
│ current channel parameter frame               │
└─────────────────────────────────────────────┘
                      │
                      ▼
┌─────────────────────────────────────────────┐
│ The UE performs frequency domain             │╮── 903
│ quantization on a zero-padded channel         │
│ parameter frame                               │
└─────────────────────────────────────────────┘
                      │
                      ▼
┌─────────────────────────────────────────────┐
│ The UE performs decision on the quantization  │╮── 904
│ and coding method, codes a quantized          │
│ coefficient, obtains feedback information,     │
│ and updates data in a buffer                   │
└─────────────────────────────────────────────┘
                      │
                      ▼
┌─────────────────────────────────────────────┐
│ The UE sends coded feedback information to    │╮── 905
│ the base station                               │
└─────────────────────────────────────────────┘
                      │
                      ▼
┌─────────────────────────────────────────────┐
│ The base station receives the feedback        │╮── 906
│ information sent by the UE, and decodes the   │
│ feedback information                           │
└─────────────────────────────────────────────┘
                      │
                      ▼
┌─────────────────────────────────────────────┐
│ The base station performs inverse             │╮── 907
│ quantization, frequency domain inverse         │
│ transformation and zero-removing processing   │
│ on a decoded quantized coefficient             │
└─────────────────────────────────────────────┘
                      │
                      ▼
┌─────────────────────────────────────────────┐
│ The base station maps the channel parameter   │
│ reconstructed frame to a corresponding         │╮── 908
│ time-frequency location, so as to obtain       │
│ reconstructed channel parameters on the        │
│ corresponding time-frequency location          │
└─────────────────────────────────────────────┘
```

FIG 9

FIG. 10

11 — Conversion module

111 — First conversion submodule

112 — Second conversion submodule

13 — Sending module

121 — Direct quantization submodule

122 — First coding submodule

123 — First inverse quantization and frequency domain inverse transformation submodule

124 — First update submodule

1210 — First mean square error submodule

1211 — First judging submodule

1212 — Second judging submodule

Frequency domain quantization and coding module — 12

125 — Differential quantization submodule

126 — Second inverse quantization and frequency domain inverse transformation submodule

127 — Adding submodule

128 — Second coding submodule

129 — Second update submodule

1213 — Zero padding submodule

FIG. 11

FIG 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009154588 A1

### Non-patent literature cited in the description

- 3GPP Draft; Comparison of CSI Feedback Schemes. Mobile Competence Centre
- 3GPP Draft; Resource Block Size and CQI Reporting. Mobile Competence Centre
- 3GPP Draft; Concatenated codebook for DL CoMP in LTE-A; R1-093352 Concatenated codebook for CoMP in FDD-V3-clean